# EUROPEAN PATENT SPECIFICATION

(11) **EP 1 837 381 B1**
(45) Date of publication and mention of the grant of the patent: **02.03.2011**
(21) Application number: 07005846.6
(22) Date of filing: 21.03.2007
(51) Int. Cl.: C09D 11/00, C09D 11/10

(54) **Ink-jet recording ink set and ink-jet recording method**
Tintensatz für Tintenstrahlaufzeichnung und Tintenstrahlaufzeichnungsverfahren
Jeu d'encre d'enregistrement par jet d'encre et procédé d'enregistrement par jet d'encre

(30) Priority: 22.03.2006 JP 2006079732
(43) Date of publication of application: 26.09.2007
(73) Proprietor: FUJIFILM Corporation, Minato-ku Tokyo (JP)
(72) Inventor: Umebayashi, Tsutomu, Ashigarakami-gun, Kanagawa (JP); Makuta, Toshiyuki, Ashigarakami-gun, Kanagawa (JP); Maeno, Yutaka, Ashigarakami-gun, Kanagawa (JP); Konno, Masaaki, Ashigarakami-gun, Kanagawa (JP); Kadomatsu, Tetsuzo, Ashigarakami-gun, Kanagawa (JP)
(74) Representative: HOFFMANN EITLE

(56) References cited:
- EP-A2- 1 149 881
- JP-A- 2005 096 254

## Description

### BACKGROUND OF THE INVENTION

### 1. Field of the invention

The present invention relates to an ink-jet recording ink set and an ink-jet recording method, in more detail, a multi-liquid ink-jet recording ink set excellent in the image reproducibility and an ink-jet recording method therewith.

### 2. Description of the related art

An ink-jet system where ink is ejected from an ink ejection port such as a nozzle, being small in size, cheap in cost and capable of forming an image on a recording medium without coming into contact therewith, is used in many printers. Among the ink-jet systems, a piezo ink-jet system where ink is ejected by making use of deformation of a piezoelectric element and a thermal ink-jet system where ink is ejected by making use of a boiling phenomenon of ink due to heat energy have advantages in the high resolving power and high-speed printability.

In a printing field that uses the ink-jet system, when an impermeable recording medium such as normal paper or plastic is used to print, high-speed printing and high quality printing are strong in demand. However, when existing water-based ink (mainly made of a colorant and water) or oil-based ink (mainly made of a colorant and a volatile organic solvent) is used to form an image on an impermeable recording medium, it takes a long time to dry a liquid droplet after printing. Accordingly, an ink droplet spreads or blurs to inhibit a sharp image from forming. Furthermore, as another problem when the ink is used to print on the impermeable recording medium, it is known that the colorant can be poorly fixed on the recording medium and thereby the abrasion resistance and water resistance are poor.

In order to inhibit an image from blurring and to improve the fixability of an image to a recording medium, as a method where curing of ink is forwarded and the ink is fastened to the recording medium. Japanese Patent Application Laid-Open (JP-A) No. 10-323975 discloses radiation-curable ink-jet ink that can be cured by radiation to fix ink on the recording medium. However, even when the radiation-curable ink-jet ink is used, it is impossible to inhibit an ink droplet from spreading during a very short time between ink droplet ejection and the irradiation of radiation and thereby to inhibit the sharpness from deteriorating.

Furthermore, as a method that is excellent in the character quality, does not cause color mixing and can stably record a high definition image on various kinds of recording materials, JP-A No. 2005-96254 proposes an image formation method where active light-curable ink that does not contain a colorant is ejected in advance on a recording material, followed by ejecting active light-curable ink that contains a colorant to form an image.

### SUMMARY OF THE INVENTION

The present invention has been made in view of the above circumstances and provides an ink-jet recording ink set and an ink-jet recording method. A first aspect of the present invention provides an ink-jet recording ink set that comprises at least one recording liquid that comprises a polymerizable compound and a colorant and an ink spread suppressing liquid that comprises a nonionic fluorinated surfactant and does not substantially contain a colorant, wherein a ratio of a content M1 of the nonionic fluorinated surfactant in the recording liquid to a content M2 of the nonionic fluorinated surfactant in the ink spread suppressing liquid satisfies M1/M2 < 1 and a molecular weight of the nonionic fluorinated surfactant contained in the ink spread suppressing liquid is 10.000 or more and 100.000 or less .
A second aspect of the present invention provides an ink-jet recording method using an ink-jet recording ink set comprising at least one recording liquid that comprises a polymerizable compound and a colorant and an ink spread suppressing liquid that comprises a nonionic fluorinated surfactant and does not substantially contain a colorant, wherein a ratio of a content M1 of the nonionic fluorinated surfactant in the recording liquid to a content M2 of the nonionic fluorinated surfactant in the ink spread suppressing liquid satisfies M1/M2 < 1 and a molecular weight of the nonionic fluorinated surfactant contained in the ink spread suppressing liquid is 10.000 or more and 100.000 or less. the method comprising applying the recording liquid and the ink spread suppressing liquid on a recording medium to form an image and hardening the formed image by applying energy thereto.

### DETAILED DESCRIPTION OF THE INVENTION

In what follows, the present invention will be detailed.

### <<Ink Set>>

An ink-jet recording ink set of the invention includes at least one recording liquid that comprises a polymerizable compound and a colorant and an ink spread suppressing liquid that comprises a nonionic fluorinated surfactant and does not substantially contain a colorant.

In what follows, liquid physical properties of the ink-jet recording ink set of the invention and main components that constitute the recording liquid and the ink spread suppressing liquid will be detailed below.

In the present specification, in some cases, the recording liquid or the ink spread suppressing liquid may be simply referred to as "an ink composition".

### <Nonionic Fluorinated Surfactant>

The nonionic fluorinated surfactant that is used in the invention is not particularly restricted. For instance, a perfluoroalkyl ethyleneoxide adduct and a perfluoroalkyl-containing oligomer can be used.

In the invention, the nonionic fluorinated surfactant that is contained in the ink spread suppressing liquid is preferably a copolymer of a monomer expressed by a following formula (a) and a monomer expressed by a following formula (b).

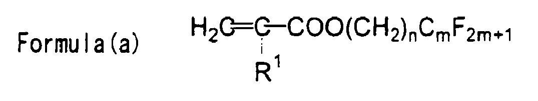

In the formula (a), R¹ expresses a hydrogen atom or a methyl group, the hydrogen atom being preferred among these. n denotes an integer from 1 to 18, an integer from 1 to 10 being preferred among these. m denotes an integer from 2 to 14, an integer from 3 to 8 being preferred among these.
A preferable mode of a monomer expressed by the formula (a) is a mode where R¹ is a hydrogen atom, n is 2 or 3 and m is 3 through 8, and a more preferable mode thereof is a mode where R¹ is a hydrogen atom, n is 2 or 3 and m is 5 or 6.

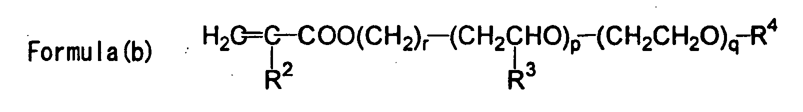

In the formula (b), R² and R³ each independently express a hydrogen atom or a methyl group, among these, R² preferably is being a hydrogen atom and R³ preferably being a methyl group. R⁴ expresses a hydrogen atom, an alkyl group having 1 to 5 carbon atoms or a hydroxyl group, among these, a hydrogen atom or a hydroxyl group being preferred. p, q and r each independently express an integer from 0 to 18, among these, an integer from 0 to 6 being preferred. However, p and q are not zero simultaneously.
A preferable mode of a monomer expressed by the formula (b) is a mode where R² is a hydrogen atom, R³ is a methyl group, R⁴ is a hydrogen atom or a hydroxyl group, p is 0 through 3, q is 1 through 6 and r is 1.

A mass ratio of a monomer expressed by the formula (a) and a monomer expressed by the formula (b) in the copolymer is preferably in the range of 10/90 to 70/30 and particularly preferably in the range of 20/80 to 60/40.

Furthermore, as the nonionic fluorinated surfactant contained in the ink spread suppressing liquid, commercially available surfactants can be used.
Examples thereof include "Megaface F-443", "Megaface F-444", "Megaface F-445", "Megaface F-446", "Megaface F-470", "Megaface F-471", "Megaface F-474", "Megaface F-475", "Megaface F-477", "Megaface F-479", "Megaface F-482", "Megaface F-483", "Megaface F-484", "Megaface F-486", "Megaface F-172D", and "Megaface F-178K", (manufactured by Dainippon Ink and Chemicals, Inc.) and others. Other examples include those described in "13,700 Chemical Products" p.1239 to 1242, The Chemical Daily Co., Ltd. (2000).

The ink spread suppressing liquid may contain together at least two kinds of the nonionic fluorinated surfactants cited above, in addition, as far as advantages of the invention are not disturbed, in addition to the nonionic fluorinated surfactant, a surfactant other than the nonionic fluorinated surfactant may be added.
Still furthermore, as far as advantages of the invention are not disturbed, a recording liquid as well may contain the nonionic fluorinated surfactant and other surfactant.

### (Contents in Recording Liquid and Ink Spread Suppressing Liquid)

In the invention, at least the ink spread suppressing liquid includes a nonionic fluorinated surfactant.
A content M2 of the nonionic fluorinated surfactant in the ink spread suppressing liquid is preferably a critical micelle concentration or more. However, since, when an amount of added surfactant is excessively high, the ink viscosity goes up to cause a fault in ink-jet droplet ejection or disturb a polymerization reaction, the amount of added surfactant is preferable not to largely exceed the critical micelle concentration.
A preferable content M2 of the invention is in the range of 0.01 to 10 % by mass or less, more preferably in the range of 0.05 to 5 % by mass or less, and particularly preferably in the range of 0.1 to 3 % by mass or less.

In order to obtain the surface tension suitable for the ink-jet droplet ejection, in the recording liquid as well, a nonionic fluorinated surfactant may be contained. In that case, a ratio of a content M1 of the nonionic fluorinated surfactant in the recording liquid to a content M2 of the nonionic fluorinated surfactant in the ink spread suppressing liquid, M1/M2, has to satisfy M1/M2 < 1. When the mode of the ink set is taken, an ink-jet recording ink set that can inhibit an ink droplet from spreading during a very short time between the ink droplet ejection and the irradiation of radiation to deteriorate the sharpness and form an excellent image can be provided.
From the above viewpoint, it is preferred to satisfy M1/M2 < 0.5, more preferred to satisfy M1/M2 < 0.1 and most preferred for M1 to be zero % by mass (that is, the recording liquid does not contain the nonionic fluorinated surfactant).

As a preferable mode of contents M1 and M2, a mode where M2 is in the range of 0.01 to 10.0 % by mass and M1 is in the range of 0 to 1.0 % by mass is preferred. a mode where M2 is in the range of 0.05 to 5.0 % by mass and M1 is in the range of 0 to 0.5 % by mass is more preferred, and a mode where M2 is in the range of 0.1 to 3.0 % by mass and M1 is 0 % by mass (that is. the recording liquid does not contain the nonionic fluorinated surfactant) is most preferred.

### (Molecular Weight)

A molecular weight of the nonionic fluorinated surfactant contained in the ink spread suppressing liquid is, from the viewpoint of further suppressing the ink droplet from spreading, in the range of 10000 to 100000.
The molecular weight here is an average molecular weight based on polystyrene molecular weight standards and can be quantitatively measured by means of gel permeation chromatography analysis (measurement unit: Shodex GPC-101 (trade name, produced by SHOWA DENKO K. K.), packed column: KF-800 series (trade name, produced by SHOWA DENKO K. K.), elution liquid; tetrahydrofuran).

### <Recording Liquid>

A recording liquid containing at least a polymerizable compound and a colorant may be liquid at room temperature. However, from the viewpoint of proper droplet ejection due to the ink-jet, the viscosity thereof is preferably 100 mPa · s or less at 25°C or 30 mPa · s or less at 60°C, more preferably 50 mPa · s or less at 25°C or 20 mPa · s or less at 60°C and particularly preferably 30 mPa · s or less at 25°C or 15 mPa · s or less at 60°C.

Furthermore, the recording liquid is preferably a nonaqueous system because it takes a time to fix when water or an aqueous solvent is contained therein.
In the invention, the nonaqueous system means a system that does not substantially contain water. Specifically, the water content in the recording liquid is normally 5 % by mass or less, preferably 3 % by mass or less and more preferably 2 % by mass or less.

As components of the recording liquid, in addition to the polymerizable compound and the colorant as indispensable components, as needs arise, a polymerization initiator and other components may be contained. The components will be described later.

### <Ink Spread Suppressing Liquid>

The ink spread suppressing liquid that contains at least a nonionic fluorinated surfactant and does not substantially contain a colorant may be liquid at room temperature. However, from the viewpoint of proper droplet ejection due to the ink-jet, the viscosity thereof is preferably 100 mPa · s or less at 25°C or 30 mPa · s or less at 60°C. more preferably 50 mPa · s or less at 25°C or 20 mPa · s or less at 60°C and particularly preferably 30 mPa · s or less at 25°C or 15 mPa · s or less at 60°C.
Furthermore, in the relationship of the recording liquid and the ink spread suppressing liquid, viscosity difference (25°C) therebetween is preferably 25 mPa · s or less.

As the component of the ink spread suppressing liquid, the nonionic fluorinated surfactant is necessarily contained. However, from the viewpoint of exhaust control of volatile organic compounds (VOC), a high boiling point organic solvent is preferably contained. Furthermore, in the ink spread suppressing liquid, a polymerization initiator and other components may be contained as needs arise. The components will be described later.
Furthermore, in the invention, that a colorant is not substantially contained specifically means that the colorant in the ink spread suppressing liquid is contained 1 % by mass or less. From the viewpoint of the color reproducibility, a concentration of the colorant in the ink spread suppressing liquid is preferably 0.1 % by mass or less and more preferably the colorant is not contained.

### <Polymerizable Compound>

A recording liquid of the invention contains at least a polymerizable compound. The polymerizable compound may be added to, in addition to the recording liquid, the ink spread suppressing liquid as well.
Any one of known polymerizable or crosslinkable materials reacting in radical polymerization reaction, cationic polymerization reaction, or dimerization reaction may be used as the polymerizable compound. Typical examples thereof include addition polymerization compounds having at least one ethylenic unsaturated double bond. epoxy compounds, oxetane compounds, oxirane compounds, polymers having a maleimide group on the side chain, polymers having a photodimerizable unsaturated double bond, such as cinnamyl, cinnamylidene, or chalcone group, close to an aromatic ring on the side chain, and the like.
The addition polymerization compound having at least one ethylenic unsaturated double bond is selected from compounds having at least one, preferably two or more, terminal ethylenic unsaturated bond (monofunctional or multifunctional compounds).
Specifically, it may be selected from the compounds widely known in the art, and examples thereof include compounds in various chemical structures, for example in the form of monomer, prepolymer (such as dimer, trimer or oligomer, or the mixture thereof), and the copolymer thereof.

Specifically, preferable examples of the polymerizable compound include compounds having a polymerizable group such as an acryloyl group, a methacryloyl group, an allyl group, a vinyl group, and an internal double bond group (e.g., maleic acid) within the molecule, and among them, compounds having acryloyl groups or methacryloyl groups are preferable from the viewpoint of causing curing reaction at low energy.

Examples of the above-described multifunctional compound include vinyl group containing aromatic compounds, (meth)acrylates which are esters of a bivalent or higher valent alcohol and (meth)acrylic acid, (meth)acrylamides which are amides of a bivalent or higher valent amine and (meth)acrylic acid, polyester (meth)acrylate in which (meth)acrylic acid is introduced into an ester obtained by combining a polybasic acid with a bivalent alcohol or polycaprolactone, polyether (meth)acrylate in which (meth)acrylic acid is introduced into an ether obtained by combining an alkylene oxide with a polyvalent alcohol, epoxy (meth)acrylate obtained by introducing (meth)acrylic acid into an epoxy resin, or by reacting a bivalent or higher valent alcohol with a epoxy-containing monomer, urethane acrylates having urethane bonds, amino resin acrylates, acrylic resin acrylates, alkyd resin acrylates, spirane resin acrylates, silicone resin acrylates, reaction products of an unsaturated polyester and a photopolymerizable monomer, and reaction products of a wax and the above-described polymerizable monomer.

Among them, (meth)acrylate, polyester (meth)acrylate, polyether (meth)acrylate, epoxy acrylate, urethane acrylate, acrylic resin acrylate, silicone resin acrylate, and reaction products of an unsaturated polyester and the photopolymerizable monomer are preferable. Acrylate, polyester acrylate, polyether acrylate, epoxy acrylate, and urethane acrylate are particularly preferable.
In the present description, (meth)acrylic acid refers to both acrylic acid and methacrylic acid.

Specific examples of the above-described multifunctional compound include divinylbenzene, 1,3-butanediol diacrylate, 1,6-hexanediol diacrylate, pentaerythritol triacrylate, trimethylolpropane triacrylate, dipentaerythritol hexaacrylate, 1,6-acryloyl aminohexane, hydroxy pivalic acid ester neopentyl glycol diacrylate, polyester acrylate having (meth)acryloyl groups at the ends of the molecular chain of polyester compound which is produced by a dibasic acid and a divalent alcohol and has a molecular weight of 500 to 30000, polyethyleneglycol diacrylate, epoxy acrylates having a bisphenol (A, S, or F) skeleton and a molecular weight of 450 to 30000, epoxy acrylates containing a phenol novolak resin skeleton and having a molecular weight of 600 to 30000, reactants of a polyvalent isocyanate and a (meth)acrylic acid monomer having hydroxy groups, and having a molecular weight of 350 to 30000, and urethane modified products having urethane bonds within the molecule.

Examples of the monofunctional compound include (meth)acrylate, styrene, acrylamide, vinyl group-containing monomers (e.g., vinyl esters, vinyl ethers, and N-vinyl amides), and (meth)acrylic acid. Among them, (meth)acrylate, acrylamide, vinyl esters, and vinyl ethers are preferable, and (meth)acrylate and acrylamide are particularly preferable.
The polymerizable compound may be nonsubstituted or substituted. Examples of the possible substituent include a halogen atom, a hydroxy group, an amide group, and a carboxylic acid group.

Specific examples of the above-described monofunctional compound include hydroxyethyl acrylate, glycidyl acrylate, tetrahydrofurfuryl acrylate, dicyclopentenyl acrylate, 2-acryloyloxyethyl phosphate, allyl acrylate, N,N-dimethylaminoethyl acrylate, N,N-dimethyl acrylamide, N,N-diethyl aminopropyl acrylamide, N-butoxymethyl acrylamide, acryloyl morpholine, 2-hydroxyethylvinyl ether, N-vinyl formamide, N-vinyl acetamide, 2-cyclohexyl carbamoyloxyethyl acrylate, acrylates having a polybutyl acrylate moiety in an ester, and acrylates having a polydimethyl siloxane moiety in an ester.

Examples of cation polymerizable compounds usable in the present invention include the epoxy compounds, vinyl ether compounds, and oxetane compounds described in JP-A No. 6-9714, JP-A No. 2001-31892, JP-A No. 2001-40068, JP-A No. 2001-55507, JP-A No. 2001-310938, JP-ANo. 2001-310937 and JP-A No. 2001-220526.

Examples of the epoxy compounds include aromatic epoxides and alicyclic epoxides.
Examples of monofunctional epoxy compounds usable in the invention include phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Examples of multifunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexyl methyl-3',4'-epoxycyclohexane carboxylate, 2-(3,4-epoxycyclohexyl-5,5-spiro-3,4-epoxy) cyclohexane-metha-dioxane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexyl-3',4'-epoxy-6'-methylcyclohexane carboxylate, methylene bis(3,4-epoxycyclohexane), dicyclopentadiene diepoxide, ethyleneglycol di(3,4-epoxycyclohexylmethyl) ether, ethylenebis(3,4-epoxycyclohexane carboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxy octane, and 1,2,5,6-diepoxy cyclooctane.
Among these epoxy compounds, aromatic epoxides and alicyclic epoxides are preferable since they are advantageous in respect of the curing rate. Alicyclic epoxides are particularly preferable.

Examples of monofunctional vinyl ethers usable in the invention include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexyl methyl vinyl ether, 4-methylcyclohexylmethyl vinyl ether, benzyl vinyl ether, dicyclopentenyl vinyl ether, 2-dicyclopentenoxy ethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxy polyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl cyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxy polyethylene glycol vinyl ether.

Examples of multifunctional vinyl ethers include: divinyl ethers such as ethylene glycol divinyl ether, diethylene glycol divinyl ether, polyethylene glycol divinyl ether, propylene glycol divinyl ether, butylene glycol divinyl ether, hexane diol divinyl ether, bisphenol A alkylene oxide divinyl ether, and bisphenol F alkylene oxide divinyl ether; and multifunctional vinyl ethers such as trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, ethylene oxide-added trimethylolpropane trivinyl ether, propylene oxide-added trimethylolpropane trivinyl ether, ethylene oxide-added ditrimethylolpropane tetravinyl ether, propylene oxide-added ditrimethylolpropane tetravinyl ether, ethylene oxide-added pentaerythritol tetravinyl ether, propylene oxide-added pentaerythritol tetravinyl ether, ethylene oxide-added dipentaerythritol hexavinyl ether, and propylene oxide-added dipentaerythritol hexavinyl ether.
From the viewpoint of curing properties, adhesion to a recording medium, and the surface hardness of an image formed, the vinyl ether compound is preferably a di-or trivinyl ether compound, particularly preferably a divinyl ether compound.

The oxetane compound usable in the invention refers to a compound having an oxetane ring. Such an oxetane compound may be selected arbitrarily from known oxetane compounds such as described in JP-A No. 2001-220526, JP-A No. 2001-310937, and JP-A No. 2003-341217. The compound having an oxetane ring usable in the ink composition of the invention is preferably a compound having 1 to 4 oxetane rings in its structure. By using such a compound, the viscosity of the ink composition can be maintained in a range which enables easy handling, and the ink after curing adheres strongly to the recording medium.

Examples of monofunctional oxetanes usable in the invention include 3-ethyl-3-hydroxymethyl oxetane, 3-(meth)allyloxymethyl-3-ethyl oxetane, (3-ethyl-3-oxetanylmethoxy)methyl benzene, 4-fluoro-[1-(3-ethyl-3-oxetanylmethoxy)methyl] benzene, 4-methoxy-[1-(3-ethyl-3-oxetanylmethoxy)methyl] benzene, [1-(3-ethyl-3-oxetanylmethoxy)ethyl] phenyl ether, isobutoxymethyl(3-ethyl-3-oxetanylmethyl) ether, isobomyloxyethyl(3-ethyl-3-oxetanylmethyl) ether, isobomyl(3-ethyl-3-oxetanylmethyl) ether, 2-ethylhexyl(3-ethyl-3-oxetanylmethyl) ether, ethyldiethylene glycol(3-ethyl-3-oxetanylmethyl) ether, dicyclopentadiene (3-ethyl-3-oxetanylmethyl) ether, dicyclopentenyloxyethyl (3-ethyl-3-oxetanylmethyl) ether, dicyclopentenyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, and bornyl(3-ethyl-3-oxetanylmethyl) ether.

Examples of multifunctional oxetanes include 3,7-bis(3-oxetanyl)-5-oxa-nonane, 3,3'-(1,3-(2-methylenyl) propanediylbis(oxymethylene)) bis-(3-ethyloxetane), 1,4-bis[(3-ethyl-3-oxetanylmethoxy)methyl] benzene, 1,2-bis[(3-ethyl-3-oxetanylmethoxy)methyl] ethane, 1,3-bis[(3-ethyl-3-oxetanylmethoxy)methyl] propane, ethylene glycol bis(3-ethyl-3-oxetanylmethyl) ether, dicyclopentenyl bis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene (3-ethyl-3-oxetanylmethyl) ether, trimethylolpropane tris(3-ethyl-3-oxetanylmethyl) ether, 1,4-bis(3-ethyl-3-oxetanylmethoxy) butane, 1,6-bis(3-ethyl-3-oxetanylmethoxy) hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis(3-ethyl-3-oxetanylmethyl) ether, ditrimethylolpropane tetrakis(3-ethyl-3-oxetanylmethyl) ether, EO-modified bisphenol A bis(3-ethyl-3-oxetanylmethyl) ether, PO-modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis(3-ethyl-3-oxetanylmethyl) ether, and EO-modified bisphenol F (3-ethyl-3-oxetanylmethyl) ether.

Such compounds having oxetane rings are described in detail in columns "0021" to "0084" of JP-A 2003-341217 supra, and the compounds described therein can be preferably used in the present invention as well. Among the oxetane compounds usable in the present invention, a compound having one or two oxetane rings is preferable from the viewpoint of the viscosity and adhesiveness of the ink composition.

When an oxetane compound is used in the invention, it is preferably used in combination with at least one compound selected form epoxy compounds and vinylether compounds.

The polymerizable compounds may be used alone or in combination of two or more thereof. However, the polymerizable compound is preferably nonaqueous, because presence of water or an aqueous solvent demands an extended period for fixing.

A content of the polymerizable compound to a total mass of the recording liquid is set, from the viewpoint of the fixability of the ink to a recording medium and inhibition of blur of the ink, preferably in the range of 50 to 98 % by mass and more preferably in the range of 80 to 98 % by mass.

### <Sp value>

The sp value is defined for various solvents and solutes, and shows solubility between the solvents and between the solvent and solute. In case, the solvent and the solute is blended, the value is calculated from energy changes when the solute is dissolved in the solvent, and can be specifically obtained by calculation using a sp value calculating program by R. L. Smith (Tohoku University). In the calculation, constituting units of polymers and polyethylene chains are defined as saturated repeating units having chemical bonds (for example, -CH₂-CH(C₆H₅)- for styrene) except compounds having no carbon atoms at a reference temperature of 25°C, and the sp value is calculated based on 47.8 of water (H₂O).

In the invention, a sp value of the ink spread suppressing liquid that is applied in advance of application of the recording liquid is preferably set at 35 or less and the difference of the sp values of the recording liquid and the ink spread suppressing liquid is preferably set at 10 or less.
When the sp value is set at 35 or less, the affinity of the ink spread suppressing liquid with the recording liquid (droplet n1, droplet n2 and so on) that contains a polymerizable or crosslinkable material that will be described below increases. Accordingly, when the first droplet n1 and the second droplet n2 are applied so as to overlap to each other, the droplets can be inhibited from merging each other and thereby an image can be inhibited from blurring and line widths of fine lines in an image can be effectively inhibited from fluctuating. The droplets n1 and n2 will be detailed in the description of an ink-jet recording method below.

In the ink spread suppressing liquid, the sp value is preferably 30 or less and more preferably 25 or less. Furthermore, the difference of the sp values of the recording liquid and the ink spread suppressing liquid is more preferably 5 or less.

When the difference of the sp values of the recording liquid and the ink spread suppressing liquid is within the above range, the recording liquid and the ink spread suppressing liquid can be readily dissolved each other. Since a contact area of the droplet n1 with a droplet B is larger than a contact area of the droplet n1 with a droplet n2, the affinity between the droplet n1 and the ink spread suppressing liquid becomes better. Accordingly, when the droplets n1 and n2 that are applied so as to overlap to each other contain a colorant, the color blurring and the color mixing between the droplet n1 and the droplet n2 can be effectively inhibited from occurring and the line width of a colored line image can be effectively inhibited from fluctuating.
The sp value can be properly controlled by use of a lipophilic solvent and a polymerizable material described below. For instance, when a ratio of the lipophilic solvent in the droplet is heightened, the sp value can be lowered.

### <Surface Tension>

In the ink set of the invention, the surface tension γ1 of the recording liquid and the surface tension γ2 of the ink spread suppressing liquid satisfy γ2 < γ1 (mN/m), preferably γ2 < γ1 - 3 (mN/m) and more preferably γ2 <γ1-5 (mN/m).
The surface tension in the invention was measured at a liquid temperature of 20°C with a generally used surface tension balance (such as a surface tension balance CBVP-Z (trade name, produced by Kyowa Interface Science Co., Ltd.)).

In order to obtain desired surface tension values of the recording liquid and the ink spread suppressing liquid, a concentration of the nonionic fluorinated surfactant may be controlled. However, a surfactant other than the nonionic fluorinated surfactant may be used together. For instance, surfactants described in JP-A Nos. 62-173463 and 62-183457 can be cited. Specifically, anionic surfactants such as dialkylsulfosuccinates, alkylnaphthalenesulfonates and fatty acid salts; nonionic surfactants such as polyoxyethylene alkylethers, polyoxyethylene alkylallyl ethers, acetylene glycols and polyoxyethylene/polyoxypropylene block copolymers; and cationic surfactants such as alkylamines salts and quaternary ammonium salts can be cited.

### <Colorant>

A recording liquid of the invention contains a colorant. A content of the colorant in the recording liquid is preferably in the range of 1 to 30 % by mass, more preferably in the range of 1.5 to 25 % by mass and particularly preferably 2 to 20 % by mass.
An ink spread suppressing liquid does not substantially contain a colorant (that is, a concentration of the colorant in the ink spread suppressing liquid is substantially 1 % by mass or less). From the viewpoint of the color reproducibility, the concentration of the colorant in the ink spread suppressing liquid is preferably 0.1 % by mass or less and more preferably 0.

The colorant used here is not particularly restricted. As far as it can achieve hue and color density adaptable for usage of the ink, it can be appropriately selected from known aqueous dyes and oil soluble dyes and pigments to use. Among these, as mentioned above, from the viewpoint of the stability in the ink droplet application, a liquid that constitutes an ink-jet recording ink set of the invention is preferred to be a liquid that is nonaqueous and does not contain an aqueous solvent. From such the viewpoint, an oil soluble dye or pigment that can be readily dispersed and dissolved uniformly in a nonaqueous liquid can be preferably used.
Furthermore, in the invention, from the viewpoint of having the durability to acids and radicals generated in the polymerization reaction, the pigment is particularly preferred.

The pigments that are preferably used in the invention will be explained.
As the pigment, organic pigments and inorganic pigments that are usually available on the market and also, pigments obtained by dyeing resin particles with dyes may be used without any particular limitation. In addition, commercially available pigment dispersants and surface treated pigments, for example, those obtained by dispersing pigments in an insoluble resin as a dispersion medium or those obtained by grafting a resin on the surface of a pigment may be used insofar as they do not impair the effect of the invention.
Examples of these pigments include the pigments described, for example, in Seijiro Itoh, "Dictionary of Pigments" (2000), W. Herbst and K. Hunger, "Industrial Organic Pigments", and JP-A Nos. 2002-12607, 2002-188025, 2003-26978, and 2003-342503, the disclosures of which are incorporated herein by reference.

Specific examples of the organic and inorganic pigments for use in the invention include the following. Examples of pigments of yellow color include: monoazo pigments such as C.I. Pigment Yellow 1 (Fast Yellow G, etc.) and C.I. Pigment Yellow 74; disazo pigments such as C.I. Pigment Yellow 12 (Disazo Yellow AAA, etc.) and C.I. Pigment Yellow 17; non-benzidine azo pigments such as C.I. Pigment Yellow 180; azolake pigments such as C.I. Pigment Yellow 100 (tartrazine yellow lake, etc.); condensation azo pigments such as C.I. Pigment Yellow 95 (Condensation Azo Yellow GR, etc.); acidic-dye lake pigments such as C.I. Pigment Yellow 115 (quinoline yellow lake, etc.); basic-dye lake pigments such as C.I. Pigment Yellow 18 (thioflavin lake, etc.); anthraquinone pigments such as flavanthrone yellow (Y-24); isoindolinone pigments such as isoindolinone yellow 3RLT (Y-110); quinophtharone pigments such as quinophtharone yellow (Y-138); isoindoline pigments such as isoindoline yellow (Y-139); nitroso pigments such as C.I. Pigment Yellow 153 (nickel nitroso yellow, etc.); and metal-complex-salt azomethine pigments such as C.I. Pigment Yellow 117 (copper azomethine yellow, etc.).

Examples of red or magenta pigments include: monoazo pigments such as C.I. Pigment Red 3 (toluidine red, etc.); disazo pigments such as C.I. Pigment Red 38 (Pyrazolone Red B, etc.); azolake pigments such as C.I. Pigment Red 53:1 (Lake Red C, etc.) and C.I. Pigment Red 57:1 (Brilliant Carmine 6B); condensation azo pigments such as C.I. Pigment Red 144 (Condensation Azo Red BR, etc.); acidic dye lake pigments such as C.I. Pigment Red 174 (Phloxine B Lake, etc.); basic dye lake pigments such as C.I. Pigment Red 81 (Rhodamine 6G' Lake, etc.); anthraquinone pigments such as C.I. Pigment Red 177 (dianthraquinolyl red, etc.); thioindigo pigments such as C.I. Pigment Red 88 (Thioindigo Bordeaux, etc.); perynone pigments such as C.I. Pigment Red 194 (perynone red, etc.); perylene pigments such as C.I. Pigment-Red 149 (perylene scarlet, etc.); quinacridone pigments such as C.I. Pigment Violet 19 (unsubstituted quinacridone) and C.I. Pigment Red 122 (quinacridone magenta, etc.); isoindolinone pigments such as C.I. Pigment Red 180 (Isoindolinone Red 2BLT, etc.); and alizarin lake pigments such as C.I. Pigment Red 83 (madder lake, etc.).

Examples of blue or cyan pigments include disazo pigments such as C.I. Pigment Blue 25 (dianisidine blue, etc.); phthalocyanine pigments such as C.I. pigment blue 15 (phthalocyanine blue, etc.); acidic dye lake pigments such as C.I. pigment blue 24 (peacock blue lake, etc.); basic dye lake pigments such as C.I. Pigment Blue 1 (Victoria Pure Blue BO Lake, etc.); anthraquinone pigments such as C.I. pigment blue 60 (indanthron blue, etc.); and alkali blue pigments such as C.I. Pigment Blue 18 (alkali blue V-5:1).

Examples of green pigments include phthalocyanine pigments such as C.I. Pigment Green 7 (phthalocyanine green) and C.I. Pigment Green 36 (phthalocyanine green); and azo metal complex pigments such as C.I. Pigment Green 8 (nitroso green).
Examples of orange pigments include isoindoline pigments such as C.I. Pigment Orange 66 (isoindoline orange); and anthraquinone pigments such as C.I. Pigment Orange 51 (dichloropyranthron orange).

Examples of black pigments include carbon black, titanium black, and aniline black.
As specific examples of white pigments, basic lead carbonate (2PbCO₃Pb(OH)₂, so-called silver white), zinc oxide (ZnO, so-called zinc white), titanium oxide (TiO₂, so-called titanium white), and strontium titanate (SrTiO₃ so-called titanium strontium white) can be used.

Since titanium oxide has a lower specific gravity and a higher refractive index than other white pigments and is more stable chemically or physically, titanium oxide has a greater masking and coloring potential as a pigment, and is further excellent in resistance to acid or alkali and other environmental factors. Thus, the use of titanium oxide as a white pigment is preferable. Of course, other white pigment (including white pigments other than those described above) may be used as necessary.

For dispersing the colorant, dispersing machines such as a ball mill, a sand mill, an attriter, a roll mill, a jet mill, a homogenizer, a paint shaker, a kneader, an agitator, a Henschel mixer, a colloid mill, an ultrasonic wave homogenizer, a pearl mill, and a wet jet mill, may be used.

When a colorant is dispersed, a commercially available dispersant can be used. As the dispersant, a polymer dispersant is preferred. As the polymer dispersant, a polymer dispersant 4000 series (trade name, produced by Efka Additives), Solsperse series (trade name, produced by Zeneca Corp.) and disperbyk series (trade name, produced by BYK-Chemie Gmbh) can be cited. Furthermore, as a dispersion aide, synergists corresponding to various kinds of pigments can be used. The dispersants and dispersion aides are preferably added in the range of 1 to 50 parts by mass relative to 100 parts by mass of the pigment.

In the ink composition, a solvent may be used as the dispersion medium for various components such as colorant, or the polymerizable compound, which is a low-molecular-weight component, may be used as a solvent-free dispersion medium. The ink composition in the invention is preferably an activated energy radiation-curable ink. The ink is preferably free of solvent because the recording liquid is cured after applied onto a recording medium. If the solvent remains in the cured image, solvent resistance may be deteriorated and a problem of VOC (Volatile Organic Compound) may occur. Thus, the dispersion medium is preferably a polymerizable compound, particularly preferably a polymerizable compound having the lowest viscosity, in view of the improvement in the dispersibility and handling property of the ink composition.

A colorant having a smaller diameter is more excellent in coloring properties. Therefore, the average particle diameter of the pigment to be used is preferably in the range of about 0.01 to 0.4 µm, more preferably in the range of 0.02 to 0.2 µm. The maximum particle diameter may be 3 µm or less, preferably 1 µm or less; such a maximum particle diameter can be achieved by appropriate selections of the colorant, the dispersant, the dispersing medium, the dispersion conditions, and the filtration conditions. By controlling the particle diameter, clogging in a head nozzle can be prevented, and the storage stability of the ink, the transparency of the ink, and the curing sensitivity can be secured.
The particle diameter of the colorant in the ink composition can be measured by a known measurement method. Specifically, the particle diameter can be measured by a centrifugal-sedimentation light-transmission method, an X-ray transmission method, a laser diffraction/scattering method, or a dynamic light scattering method.
In the invention, the values obtained by measurement using a laser diffraction/scattering method are adopted.

### (Polymerization initiator)

At least one of the recording liquid and ink spread suppressing liquid of the invention preferably contains a polymerization initiator for radical polymerization or a cation polymerization and particularly preferably contains a photo-polymerization initiator. From the view point of liquid storage stability of the recording liquid and the ink spread suppressing liquid, the polymerization initiator is preferably contained in the ink spread suppressing liquid to separate from the polymerizable compound.
The polymerization initiator in the invention is a compound that is changed chemically through the action of light or an interaction with a sensitizing dye put in an electron excited state to produce at least one of a radical, an acid and a base. Particularly, the polymerization initiator used in the invention is preferably the photo-radical initiator or a photo-acid generator from the viewpoint of initiating polymerization by such a simple means as exposure.
The photopolymerization initiator may be selected appropriately from initiators having sensitivity to the activated ray for irradiation, such as UV ray at 400 to 200 nm, far UV ray, g-line, h-line, i-line, KrF excimer laser light, ArF excimer laser light, electron ray, X-ray, molecular beam, or ion beam.

Specifically, any of common photopolymerization initiators known in the art may be used. Specific examples thereof are described, for example, in Bruce M. Monroe et al., Chemical Revue, 93, 435 (1993); R, S. Davidson, Journal of Photochemistry and biology, A: Chemistry, 73, 81 (1993); J. P. Faussier, "Photoinitiated Polymerization-Theory and Applications": Rapra Review vol. 9, Report, Rapra Technology (1998); and M. Tsunooka et al., Prog. Polym. Sci., 21, 1 (1996), the disclosures of which are incorporated herein by reference. Many compounds favorably used in chemical-amplification photoresists and for photocationic polymerization are also described in Japanese Research Association for Organic Electronics Materials Ed., "Organic Materials for Imaging" (published by Bun-Shin Shuppan (1993), pp. 187 to 192), the disclosure of which is incorporated herein by reference. The compounds that undergo oxidative or reductive bond cleavage through the interaction with the electronically-excited state of sensitizing dye are also known, and described, for example in F. D. Saeva, Topics in Current Chemistry, 156, 59 (1990); G. G. Maslak, Topics in Current Chemistry, 168, 1 (1993); H. B. Shuster et al., JACS, 112, 6329 (1990); I. D. F. Eaton et al., JACS, 102, 3298 (1980), the disclosures of which are incorporated herein by reference.

Preferable examples of such photopolymerization initiators include (a) aromatic ketones, (b) aromatic onium salt compounds, (c) organic peroxides, (d) hexaarylbiimidazole compounds, (e) ketoxime ester compounds, (f) borate compounds, (g) azinium compounds, (h) metallocene compounds, (i) active ester compounds, and (j) compounds containing a carbon-halogen bond.

Preferable examples of the aromatic ketones (a) include the compounds each having a benzophenone or thioxanthone skeleton described, for example in "Radiation Curing in Polymer Science and Technology" J. P. Fouassier and J. F. Rabek (1993), pp. 77 to 117, the disclosure of which is incorporated herein by reference. More preferable examples of the aromatic ketones (a) include the α-thio benzophenone compounds described in Japanese Patent Application Publication (JP-B) No. 47-6416 (the disclosure of which is incorporated herein by reference); the benzoin ether compounds described in JP-B No. 47-3981 (the disclosure of which is incorporated herein by reference); the α-substituted benzoin compounds described in JP-B No. 47-22326 (the disclosure of which is incorporated herein by reference); the benzoin derivatives described in JP-B No. 47-23664 (the disclosure of which is incorporated herein by reference); the aroyl phosphonic acid esters described in Japanese Patent Application Laid-Open (JP-A) No. 57-30704 (the disclosure of which is incorporated herein by reference); the dialkoxybenzophenones described in JP-B No. 60-26483 (the disclosure of which is incorporated herein by reference); the benzoin ethers described in JP-B No. 60-26403 and JP-A No. 62-81345 (the disclosures of which are incorporated herein by reference); the α-amino benzophenones described in JP-B No. 1-34242, U.S. Patent No. 4,318,791, and EP Patent No. 0284561A1 (the disclosures of which are incorporated herein by reference); p-di(dimethylaminobenzoyl)benzene described in JP-A No. 2-211452 (the disclosure of which is incorporated herein by reference); the thio-substituted aromatic ketones described in JP-A No. 61-194062 (the disclosure of which is incorporated herein by reference); the acylphosphine sulfides described in JP-B No. 2-9597 (the disclosure of which is incorporated herein by reference); the acylphosphines described in JP-B No. 2-9596 (the disclosure of which is incorporated herein by reference); the thioxanthones described in JP-B No. 63-61950 (the disclosure of which is incorporated herein by reference); and the coumarins described in JP-B No. 59-42864 (the disclosure of which is incorporated herein by reference).

Examples of the aromatic onium salt compounds (b) include aromatic onium salts of the elements in Groups V, VI and VII in the periodic table, specifically, aromatic onium salts ofN, P, As, Sb, Bi, O, S, Se, Te, and I. Preferable examples thereof include the iodonium salts described in EP Patent No. 104143, U.S. Patent No. 4837124, and JP-A Nos. 2-150848 and 2-96514 (the disclosures of which are incorporated herein by reference); the sulfonium salts described in EP Patent Nos. 370693, 233567, 297443, 297442, 279210, and 422570 and U.S. Patent Nos. 3902144, 4933377, 4760013, 4734444, and 2833827 (the disclosures of which are incorporated herein by reference); diazonium salts (e.g., benzene diazonium salts which may have one or more substituted groups); diazonium salt resins (e.g., formaldehyde resins of diazodiphenylamine); N-alkoxypyridinium salts (e.g., those described in U.S. Patent No. 4,743,528, JP-ANos. 63-138345, 63-142345, and 63-142346, and JP-B No. 46-42363 (the disclosures of which are incorporated herein by reference), and specifically, 1-methoxy-4-phenylpyridinium tetrafluoroborate, etc.); and the compounds described in JP-B Nos. 52-147277, 52-14278, and 52-14279 (the disclosures of which are incorporated herein by reference). The aromatic onium salt compound (b) generates a radical or an acid as an active species.

Examples of the organic peroxides (c) include almost all organic compounds having one or more oxygen-oxygen bonds in the molecule; and preferable examples thereof include peroxide esters such as 3,3',4,4'-tetra-(t-butylperoxycarbonyl)benzophenone, 3,3',4,4'-tetra-(t-amylperoxycarbonyl)benzophenone, 3,3',4,4'-tetra-(t-hexylperoxycarbonyl)benzophenone, 3,3',4,4'-tetra-(t-octylperoxycarbonyl)benzophenone, 3,3',4,4'-tetra-(cumylperoxycarbonyl)benzophenone, 3,3' ,4,4' -tetra-(p-isopropyl cumylperoxycarbonyl)benzophenone, and di-t-butyl diperoxyisophthalate.

Examples of the hexaarylbiimidazole compounds (d) include the Rofin dimers described in JP-B Nos. 45-37377 and 44-86516, such as 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o-, p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o-, o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole, and 2,2'-bis(o-trifluorophenyl)-4,4',5,5'-tetraphenylbiimidazole.

Examples of the ketoxime ester compounds (e) include 3-benzoyloxyiminobutan-2-one, 3-acetoxyiminobutan-2-one, 3-propionyloxyiminobutan-2-one, 2-acetoxyiminopentane-3-one, 2-acetoxyimino-1-phenylpropan-1-one, 2-benzoyloxyimino-1-phenylpropan-1-one, 3-p-toluenesulfonyloxyiminobutan-2-one, and 2-ethoxycarbonyloxyimino-1-phenylpropan-1-one.

Examples of the borate compounds (f) as examples of other photopolymerizable initiator of the invention include the compounds described in U.S. Patent Nos. 3,567,453 and 4,343,891, and EP Patent No. 109,772 and 109,773 (the disclosures of which are incorporated herein by reference).
Examples of the azinium compounds (g) as examples of other photopolymerizable initiator of the invention include the compounds containing an N-O bond described in JP-A Nos. 63-138345, 63-142345, 63-142346, and 63-143537, and JP-B No. 46-42363, the disclosures of which are incorporated herein by reference.

Examples of the metallocene compounds (h) as examples of other photopolymerizable initiator of the invention include the titanocene compounds described in JP-A Nos. 59-152396, 61-151197, 63-41484, 2-249, and 2-4705 (the disclosures of which are incorporated herein by reference) and the iron-allene complexes described in JP-A Nos. 1-304453 and 1-152109 (the disclosures of which are incorporated herein by reference).
Specific examples of the titanocene compounds include
di-cyclopentadienyl-Ti-dichloride, dicyclopentadienyl-Ti-bisphenyl,
di-cyclopentadienyl-Ti-bis-2,3,4,5,6-pentafluorophen-1-yl,
di-cyclopentadienyl-Ti-bis-2,3,5,6-tetrafluorophen-1-yl,
di-cyclopentadienyl-Ti-bis-2,4,6-trifluorophen-1-yl,
di-cyclopentadienyl-Ti-2,6-difluorophen-1-yl,
di-cyclopentadienyl-Ti-bis-2,4-difluorophen-1-yl,
di-methylcyclopentadienyl-Ti-bis-2,3,4,5,6-pentafluorophen-1-yl,
di-methylcyclopentadienyl-Ti-bis-2,3,5,6-tetrafluorophen-1-yl,
di-methylcyclopentadienyl-Ti-bis-2,4-difluorophen-1-yl,
bis(cyclopentadienyl)-bis(2,6-difluoro-3-(pyr-1-yl)phenyl)titanium, bis(cyclopentadienyl)
bis[2,6-difluoro-3-(methyl sulfonamide)phenyl]titanium, and bis(cyclopentadienyl)
bis[2,6-difluoro-3-(n-butylbiaroyl-amino)phenyl)titanium.

Examples of the active ester compounds (i) include the nitrobenzylester compounds described in EP Patent Nos. 0290750, 046083, 156153, 271851, and 0388343, U.S. Patent Nos. 3901710 and 4181531, and JP-ANos. 60-198538 and 53-133022 (the disclosures of which are incorporated herein by reference); the iminosulfonate compounds described in EP Patent Nos. 0199672, 84515, 199672, 044115, and 0101122, U.S. Patent Nos. 4618564, 4371605 and 4431774, and JP-A Nos. 64-18143, 2-245756, and 4-365048 (the disclosures of which are incorporated herein by reference); and the compounds described in JP-B Nos. 62-6223 and 63-14340, and JP-A No. 59-174831 (the disclosure of which is incorporated herein by reference).

Preferable examples of the compounds (j) containing carbon-halogen bonds include the compounds described in Wakabayashi et al., Bull. Chem. Soc, Japan, 42, 2924 (1969) (the disclosure of which is incorporated herein by reference); the compounds described in British Patent No. 1388492 (the disclosure of which is incorporated herein by reference); the compounds described in JP-ANo. 53-133428 (the disclosure of which is incorporated herein by reference); and the compounds described in German Patent No. 3337024 (the disclosure of which is incorporated herein by reference).

Further examples include the compounds described in F. C. Schaefer et al., J. Org. Chem. 29, 1527 (1964) (the disclosure of which is incorporated herein by reference); the compounds described in JP-A No. 62-58241 (the disclosure of which is incorporated herein by reference); the compounds described in JP-A No. 5-281728 (the disclosure of which is incorporated herein by reference); as well as the compounds described in German Patent No. 2641100 (the disclosure of which is incorporated herein by reference); the compounds described in German Patent No. 3333450 (the disclosure of which is incorporated herein by reference); the compounds described in German Patent No. 3021590 (the disclosure of which is incorporated herein by reference); and the compounds described in German Patent No. 3021599 (the disclosure of which is incorporated herein by reference).

Preferable specific examples of the compounds represented by (a) to (j) are shown below:

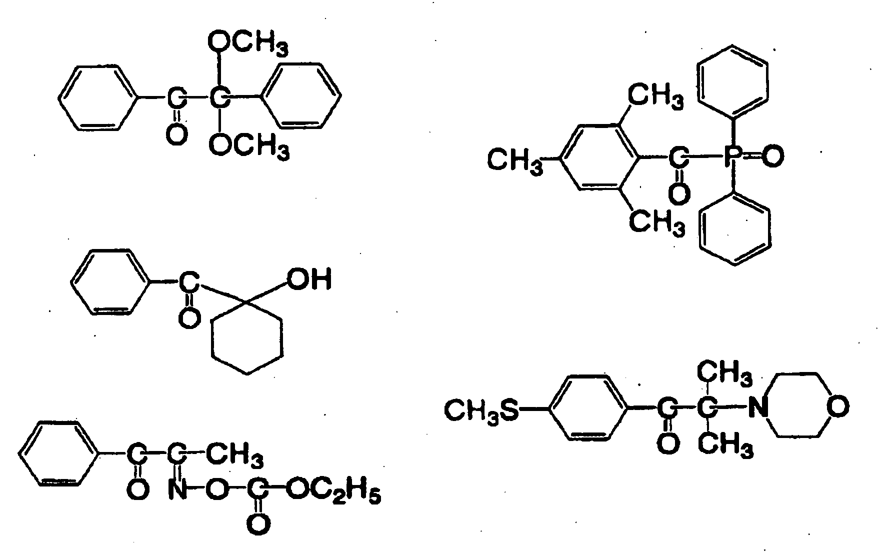

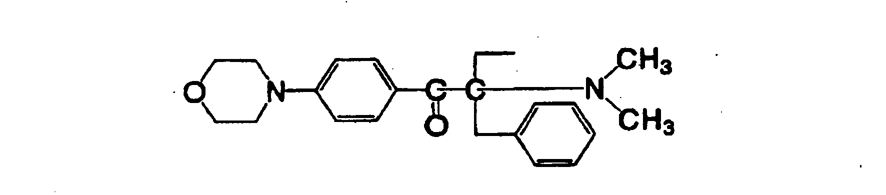

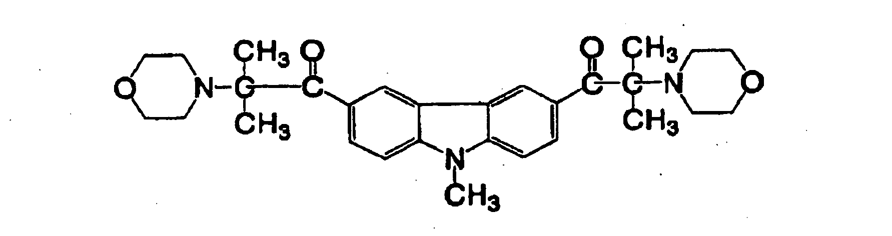

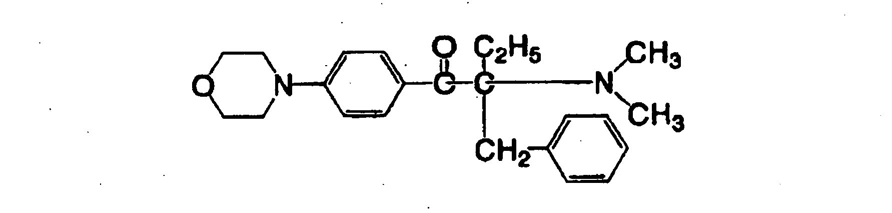

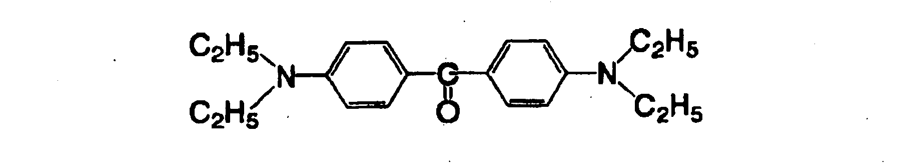

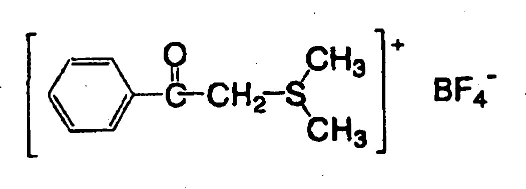

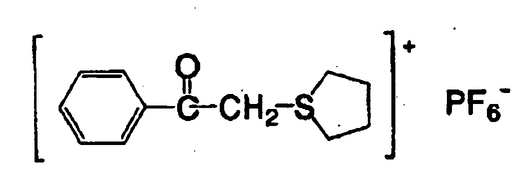

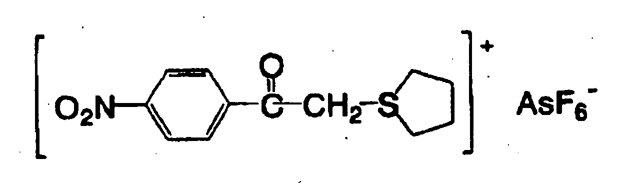

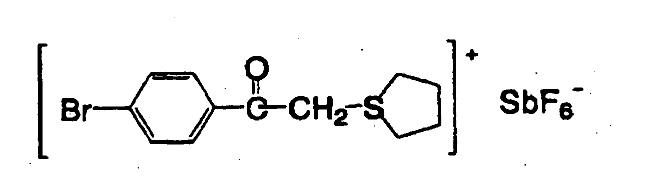

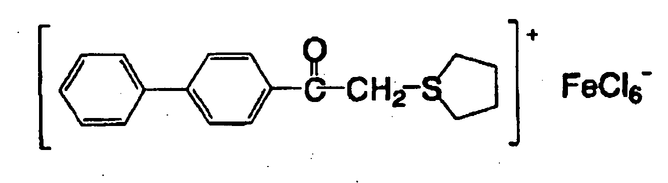

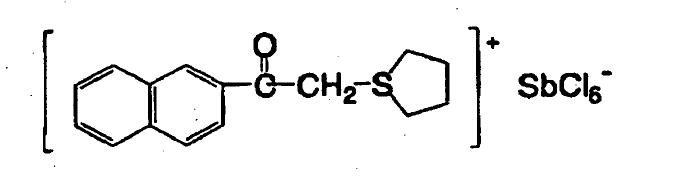

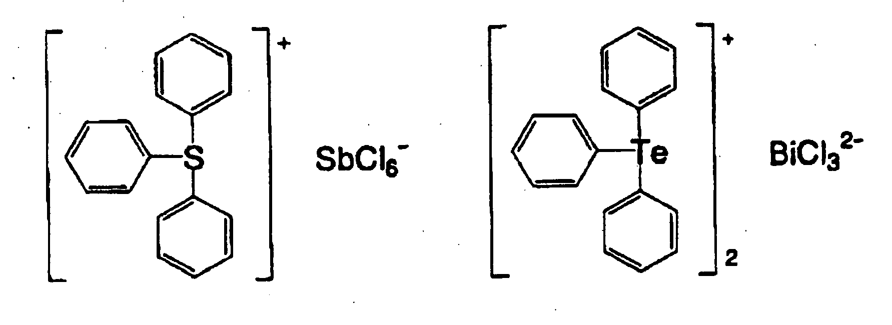

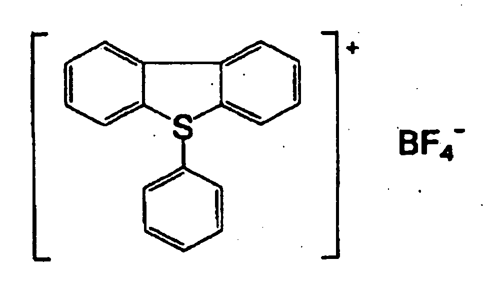

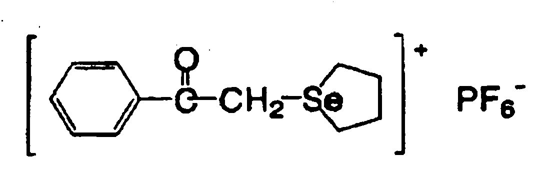

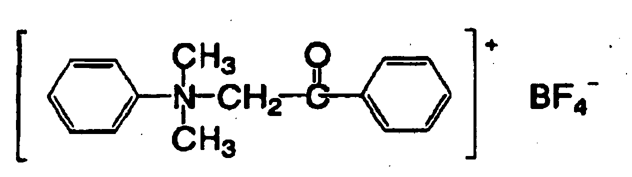

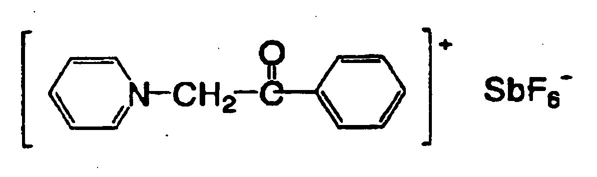

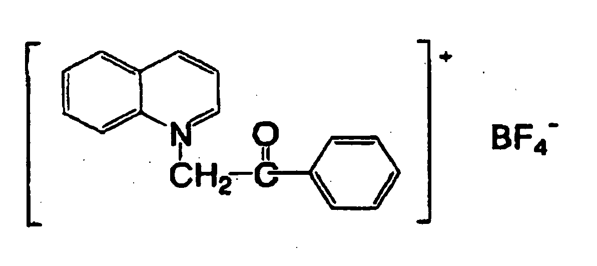

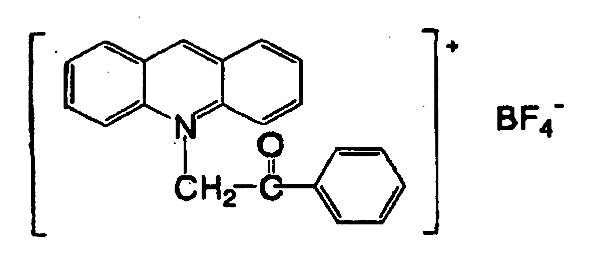

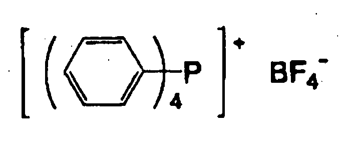

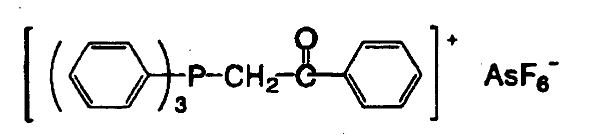

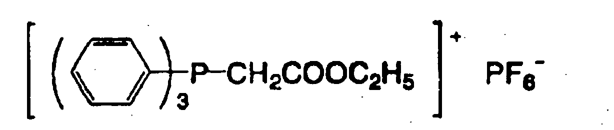

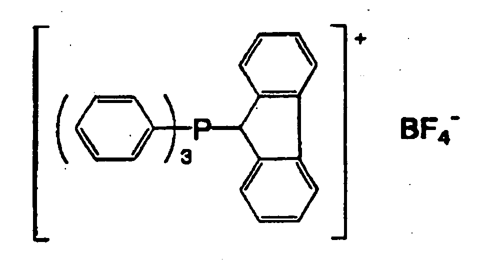

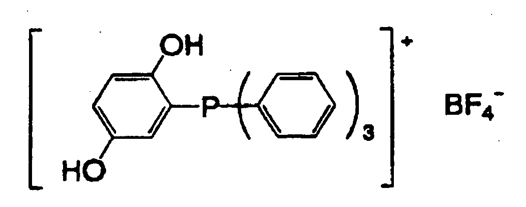

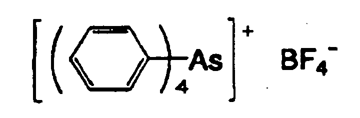

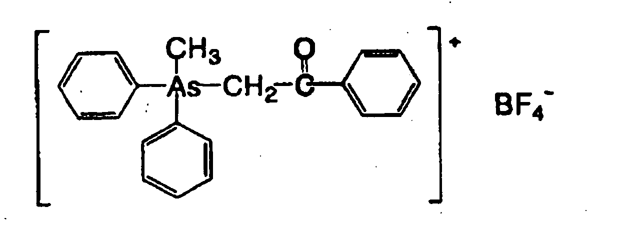

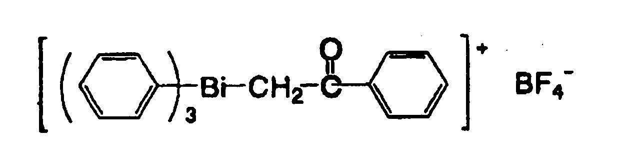

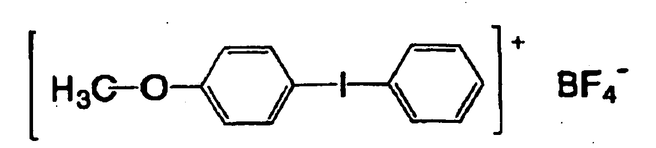

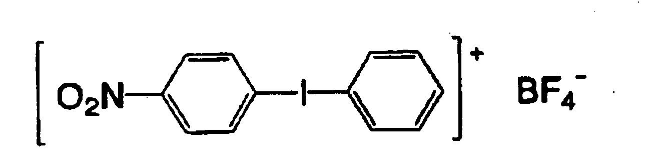

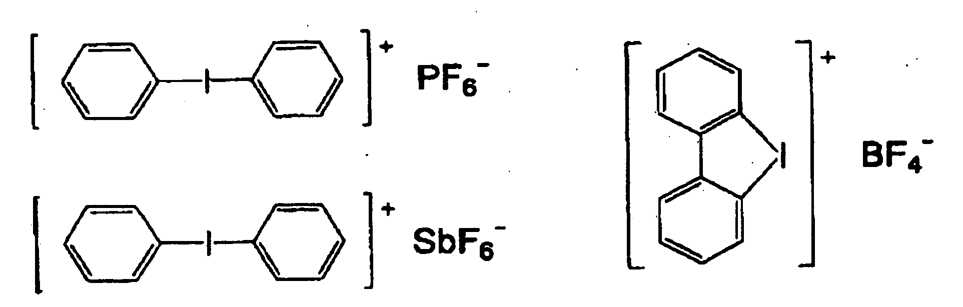

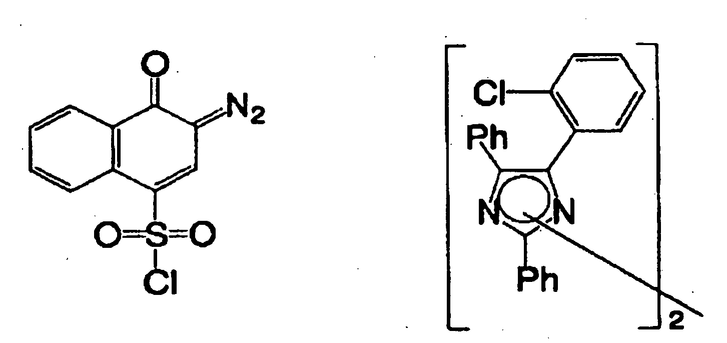

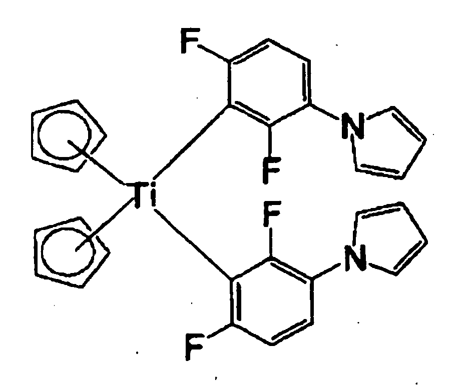

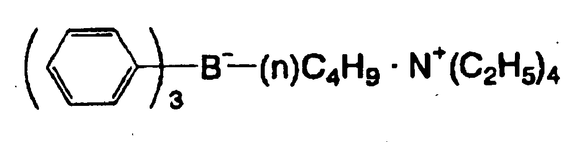

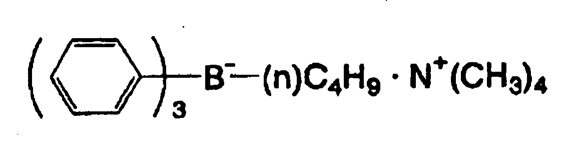

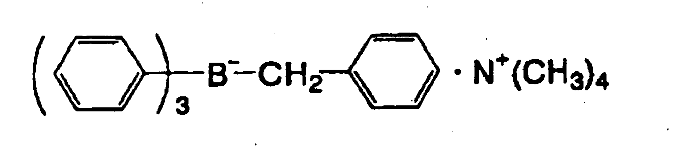

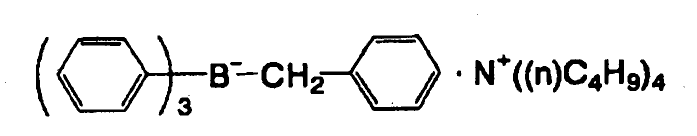

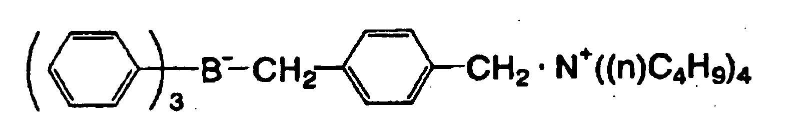

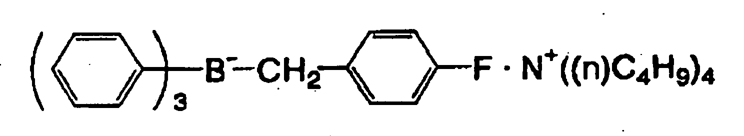

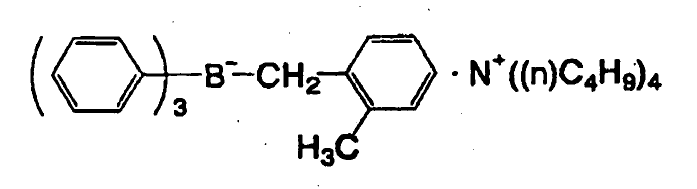

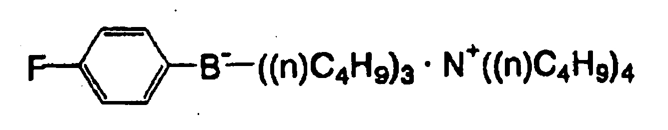

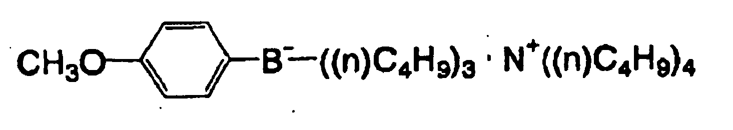

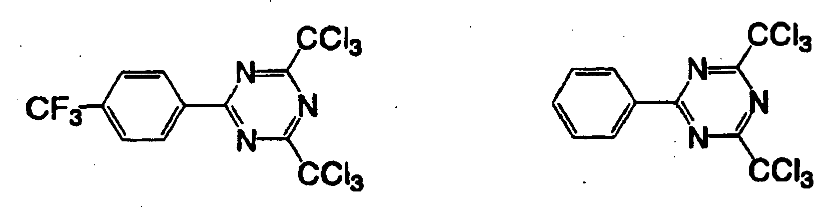

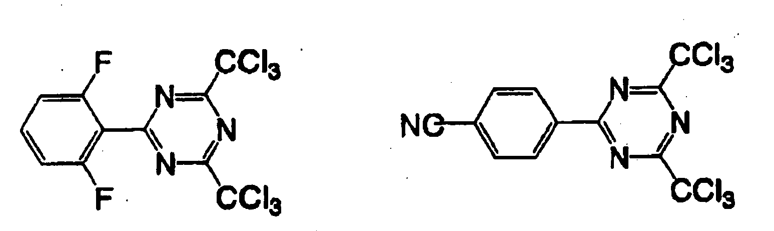

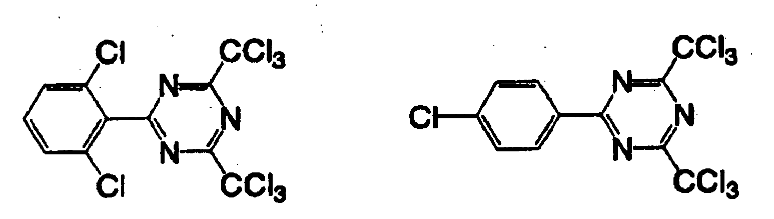

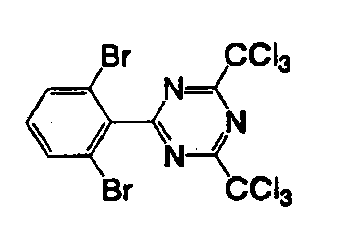

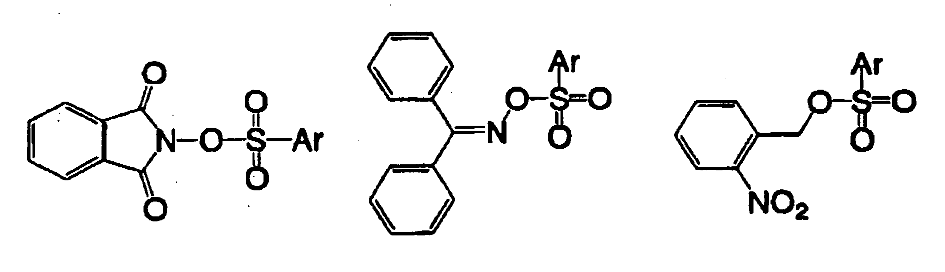

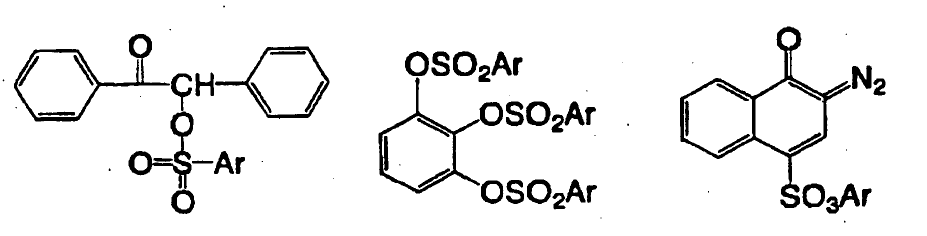

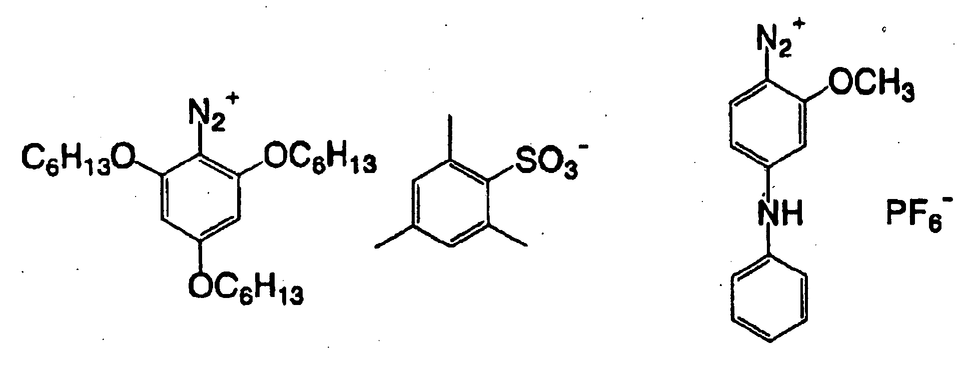

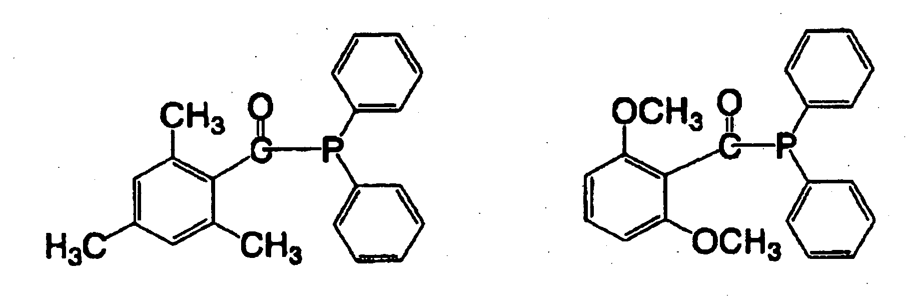

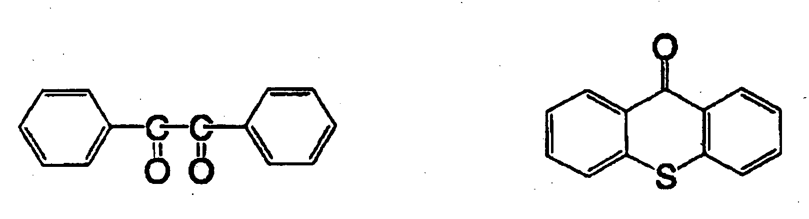

Polymerization initiators can be used alone or in combination of two or more thereof.
A content of the polymerization initiator in the ink composition is, based on a total solid content of the ink composition, preferably in the range of 0.1 to 20 % by mass, more preferably in the range of 0.5 to 10 % by mass and still more preferably in the range of 1 to 7 % by mass.
Furthermore, when the polymerization initiator is contained only in the ink spread suppressing liquid, a content of the polymerization initiator is preferably in the range of 1 to 10 % by mass and more preferably in the range of 2 to 8 % by mass or less.

Still furthermore, when the polymerization initiator is contained only in the ink spread suppressing liquid, in order to improve the dispersibility of the polymerization initiator, a polymerization initiator having a relatively low molecular weight is preferred. As the polymerization initiator that has a low molecular weight and excellent curability, TPO-L (trade name, polymerization initiator-1 below), Irgacure 1870 and Darocur (trade name, produced by Ciba Specialty Chemicals Corp.) can be cited, TPO-L being preferred.

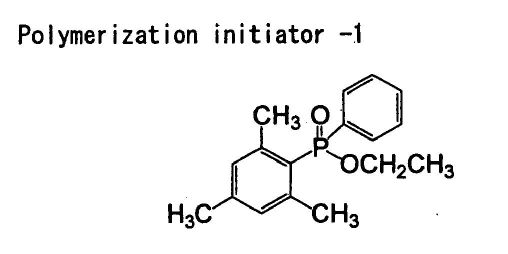

### (Sensitization dye)

A sensitization dye may be added to the ink composition for improvement in sensitivity of the photopolymerization initiator.
Preferable examples of the sensitizing dye include those belonging to the following compound classes and having absorption wavelengths in the range of 350 to 450 nm: multinuclear aromatics (e.g., pyrene, perylene, and triphenylene), xanthenes (e.g., fluorescein, eosin, erythrosine, rhodamine B, and Rose Bengal), cyanines (e.g., thiacarbocyanine and oxacarbocyanine), merocyanines (e.g., merocyanine and carbomerocyanine), thiazines (e.g., thionine, methylene blue, and toluidine blue), acridines (e.g., acridine orange, chloroflavin, and acryflavin), anthraquinones (e.g., anthraquinone), squaliums (e.g., squalium), coumarins (e.g., 7-diethylamino-4-methyl coumarin).

More preferable examples of the sensitizing dye include compounds represented by the following formulae (IX) to (XIII):

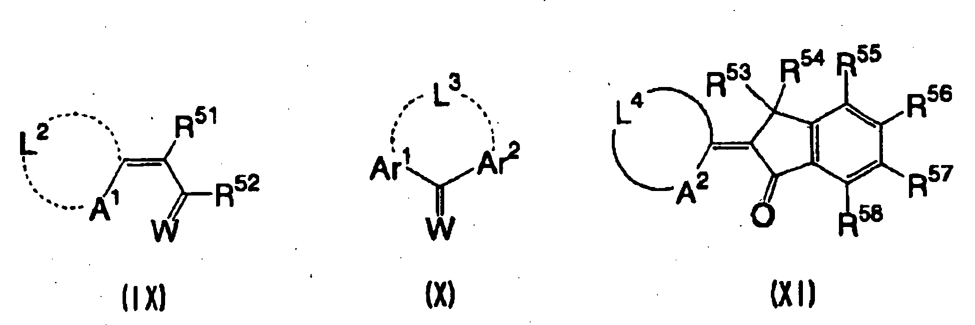

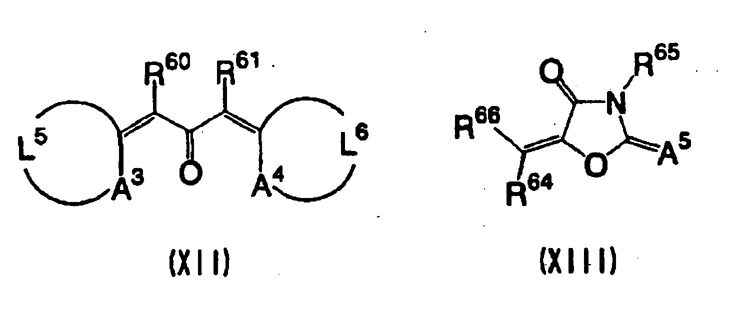

In formula (IX), A¹ represents a sulfur atom or NR⁵⁰, R⁵⁰ represents an alkyl group or an aryl group, L² represents a nonmetallic atomic group which, together with A¹ and the carbon atom adjacent thereto, forms a basic nucleus of a dye, R⁵¹ and R⁵² each independently represent a hydrogen atom or a monovalent nonmetallic atomic group, R⁵¹ and R⁵² may be bound to each other to form an acidic nucleus of a dye, and W represents an oxygen atom or a sulfur atom.
In formula (X), Ar¹ and Ar² each independently represent an aryl group, and are bound to each other via a linkage -L³- which represents -O- or -S-. W has the same definition as in formula (IX).
In formula (XI), A² represents a sulfur atom or NR⁵⁹, L⁴ represents a nonmetallic atomic group which, together with A² and the carbon atom adjacent thereto, forms a basic nucleus of a dye, R⁵³, R⁵⁴, R⁵⁵, R⁵⁶, R⁵⁷ and R⁵⁸ each independently represent a monovalent nonmetallic atomic group, and R⁵⁹ represents an alkyl group or an aryl group.

In formula (XII), A³ and A⁴ each independently represent -S- or NR⁶² or NR⁶³-. R⁶² and R⁶³ each independently represent a substituted or unsubstituted alkyl group or a substituted or unsubstituted aryl group. L⁵ represent a nonmetallic atomic group which, together with A³ and the carbon atom adjacent thereto, forms a basic nucleus of a dye. L⁶ represent a nonmetallic atomic group which, together with A⁴ and the carbon atom adjacent thereto, forms a basic nucleus of a dye. R⁶⁰ and R⁶¹ each independently represent a hydrogen atom or a monovalent nonmetallic atomic group, or R⁶⁰ and R⁶¹ are bound to each other to form an aliphatic or aromatic cycle.
In formula (XIII), R⁶⁶ represents an optionally substituted aromatic cycle or heterocycle, A⁵ represents an oxygen atom, a sulfur atom, or -NR⁶⁷-. R⁶⁴, R⁶⁵, and R ⁶⁷ each independently represent a hydrogen atom or a monovalent nonmetallic atomic group. R⁶⁷ and R⁶⁴ may be bonded to each other to form an aliphatic or aromatic ring. R⁶⁵ and R⁶⁷ may be bonded to each other to form an aliphatic or aromatic cycle.

Preferable specific examples of the compounds represented by formulae (IX) to (XIII) include exemplary compounds (A-1) to (A-20) shown below:

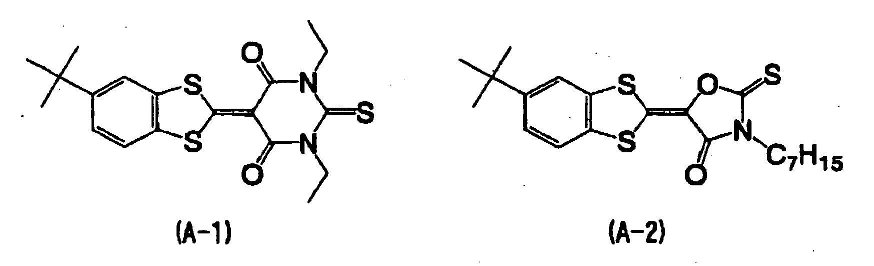

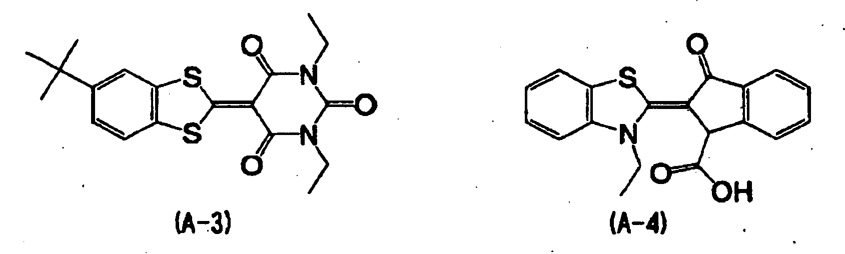

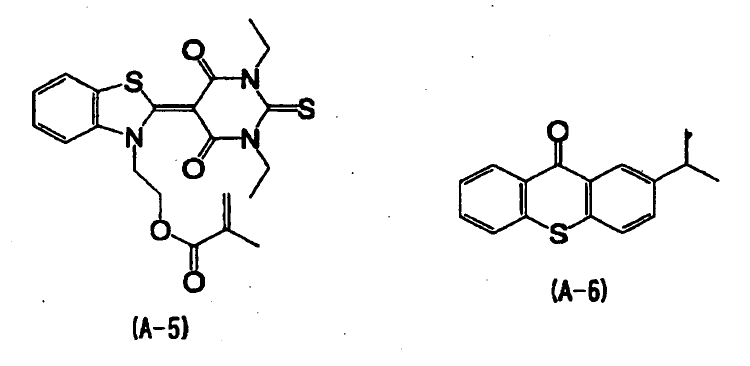

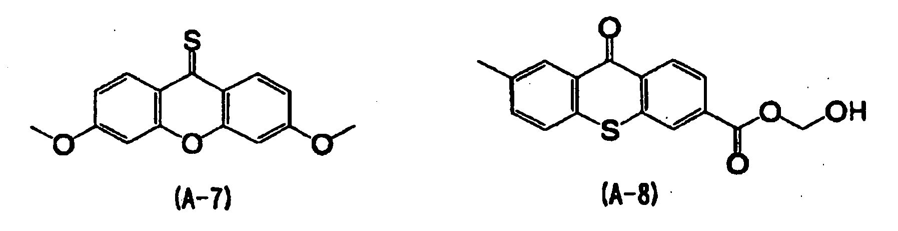

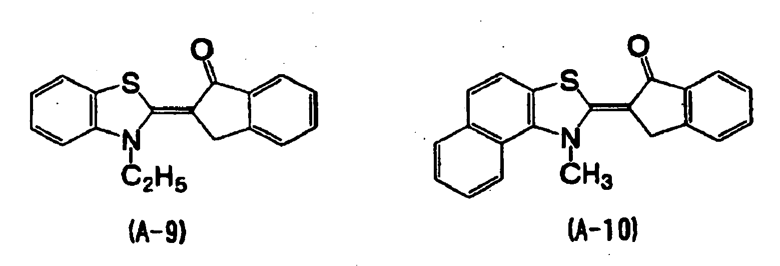

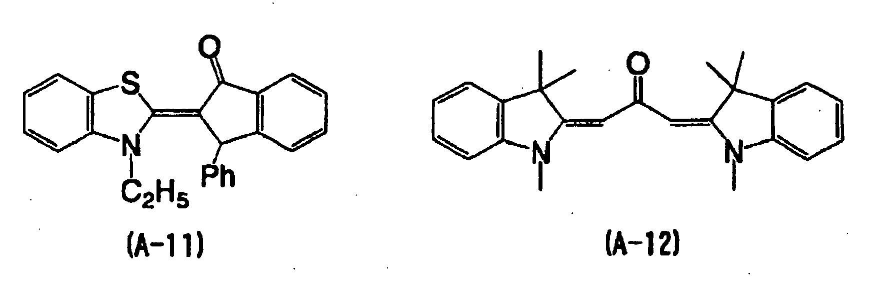

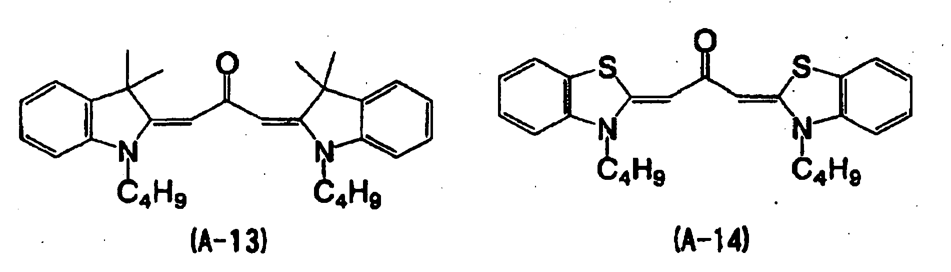

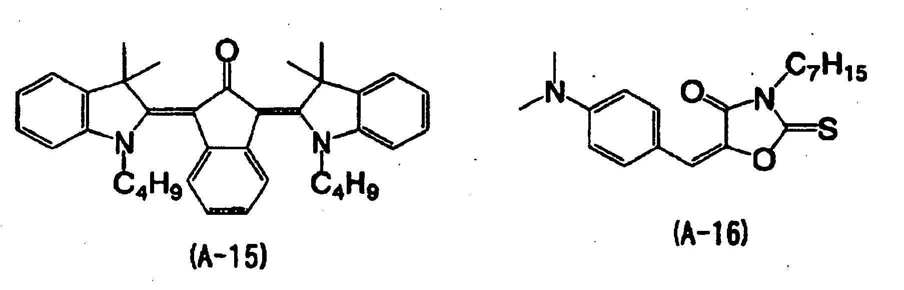

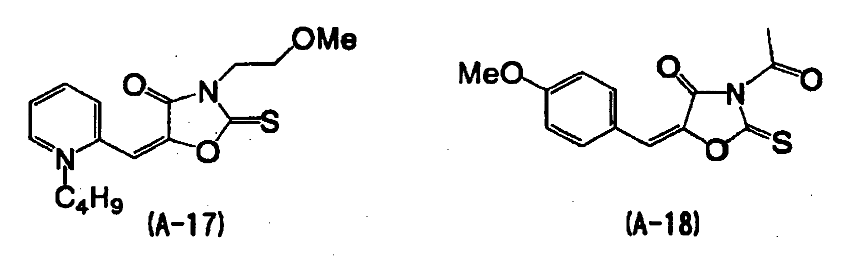

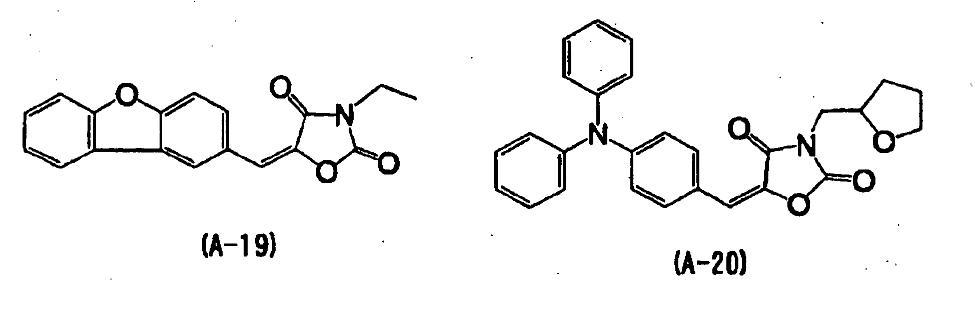

### (Cosensitizer)

In addition, a known compound for further improvement in sensitivity or prevention of the polymerization inhibition by oxygen may be added as a cosensitizer to the ink composition according to the invention. The cosensitizer is also preferably contained in the ink composition.
Examples of the cosensitizer include the amines described, for example, in M. R, Sander et al., "Journal of Polymer Society" 10, p. 3173, (1972), JP-B No. 44-20189, JP-A Nos. 51-82102, 52-134692, 59-138205, 60-84305, 62-18537, and 64-33104 and Research Disclosure 33825 (the disclosures of which are incorporated herein by reference); and specific examples thereof include triethanolamine, ethyl p-dimethylaminobenzoate, p-formyldimethylaniline, and p-methylthiodimethylaniline.

Other examples of the cosensitizer include thiols and sulfides, for example, the thiol compounds described in JP-A No. 53-702, JP-B No. 55-500806, and JP-A No. 5-142772 (the disclosures of which are incorporated herein by reference), and the disulfide compounds described in JP-A No. 56-75643 (the disclosure of which is incorporated herein by reference); and specific examples thereof include 2-mercaptobenzothiazole, 2-mercaptobenzoxazole, 2-mercaptobenzimidazole, 2-mercapto-4(3H)-quinazoline, and β-mercaptonaphthalene.
Yet other examples of the cosensitizer include amino acid compounds (e.g., N-phenylglycine), the organic metal compounds described in JP-B No. 48-42965 (e.g., tributyltin acetate), the hydrogen donors described in JP-B No. 55-34414, the sulfur compounds described in JP-A No. 6-308727 (e.g., trithiane), the phosphorus compounds described in JP-A No. 6-250387 (e.g., diethyl phosphite), and the Si-H and Ge-H compounds described in JP-A No. 8-65779.

### <Lipophilic Solvent>

The recording liquid and the ink spread suppressing liquid (preferably the ink spread suppressing liquid) of the invention may contain a lipophilic solvent.
The lipophilic solvent is effective in inhibiting an image from blurring and widths of lines such as fine lines in an image from fluctuating and at the same time can control the sp values of the recording liquid and the ink spread suppressing liquid within the above-mentioned range.
The "lipophilicity" here means to have the solubility of 1 g or less to 100 cc of water.

The lipophilic solvent is contained or not contained in the ink spread suppressing liquid and can be contained in the recording liquid. Furthermore, the lipophilic solvent may be contained in a liquid other than the recording liquid and the ink spread suppressing liquid.

As the lipophilic solvent, high boiling point organic solvents and the polymerizable compounds can be cited. In order to inhibit a nozzle from solidifying, the high boiling point organic solvents are preferred and, in order to improve the film strength of a film formed from the ink, the polymerizable compounds can be preferably used.
In what follows, preferable high boiling point organic solvents in the invention will be described.

The high boiling point organic solvent is preferably a solvent having (1) a viscosity of 100 mPa·s or less at 25 °C, or a viscosity of 30 mPa·s or less at 60°C, and (2) a boiling point of higher than 100°C.

A high boiling point organic solvent not satisfying any one of the conditions of (1) has an increased viscosity, making ejection of the ink on recording medium difficult, and a high boiling point organic solvent not satisfying the condition in boiling point (2) has an excessively lower boiling point, leading to vaporization during image recording and consequently to decrease of the advantageous effects of the invention.

For the conditions as described in above (1), the viscosity at 25 °C is preferably in the range of 70 mPa·s or lower, more preferably, in the range of 40mPa·s or lower, and most preferably in the range of 20 mPa·s or lower. The viscosity at 60°C is preferably in the range of 20 mPa·s or lower, and most preferably in the range of 10 mPa·s or lower. For the conditions as described in above (2), the boiling point is more preferably in the range of 150°C or higher, and most preferably in the range of 170°C or higher. The lower limit of the melting point is preferably in the range of 80°C or lower. Furthermore, the solubility of water (25°C) is preferably 4 g or less, more preferably in the range of 3 g or less, further preferably in the range of 2 g or less, and most preferably in the range of 1 g or less.

The above-described "viscosity" has been determined using a RE80 type viscometer (manufactured by Toki Sangyo Co., Ltd.). The RE80 type viscometer is a conical-frustum type viscometer corresponding to an E type. The viscosity was measured at a rotational speed of 10 r.p.m. using a rotor of rotor code No.1. The rotational speed was as necessary changed to 5 r.p.m., 2.5 r.p.m., 1 r.p.m., 0.5 r. p.m., or others for measuring solvents having a viscosity higher than 60 mPa·s.

"Solubility of water" refers to the saturation density of water in a high boiling point organic solvent at 25°C, and means the mass (g) of water soluble in 100 g of the high boiling point organic solvent at 25°C.

As the above-described high boiling point organic solvent, the compounds represented by the following formulae [S-1] to [S-9] are preferable.

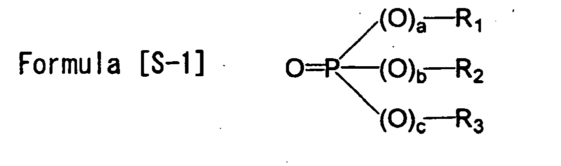

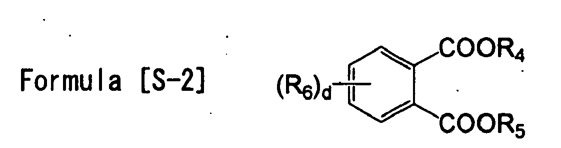

Formula [S-3] (Ar-COO)ₑ-R₇

Formula [S-4] (R₈-COO)_{f}-R₉

Formula [S-5] R₁₀-(COO-R₁₁)_{g}

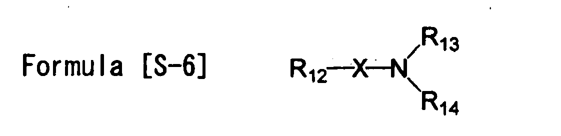

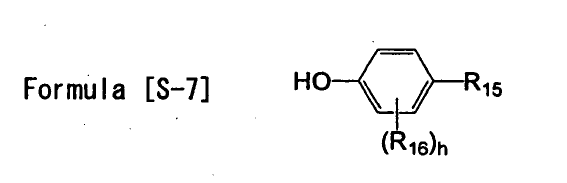

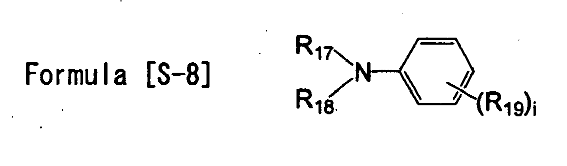

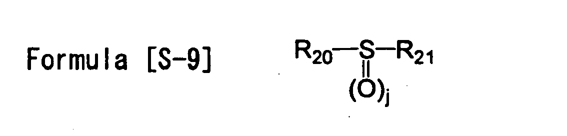

In the above-described formula [S-1], R₁, R₂ and R₃ each independently represent an aliphatic group or an aryl group. a, b, and c each independently represent 0 or 1.

In the formula [S-2], R₄ and R₅ each independently represent an aliphatic group or an aryl group, R₆ represents a halogen atom (F, Cl, Br, I, hereinafter the same), an alkyl group, an alkoxy group, an aryloxy group, an alkoxycarbonyl group, or an aryloxycarbonyl group, and d represents an integral number of 0 to 3. When d is two or more, a plurality of R₆s may be the same or different from each other.

In the formula [S-3], Ar represents an aryl group, e represents an integral number of 1 to 6, and R₇ represents a hydrocarbon group having a valence of e or hydrocarbon groups linked each other by an ether bond.

In the formula [S-4], R₈ represents an aliphatic group, f represents an integral number of 1 to 6, and R₉ represents a hydrocarbon group having a valence of f or hydrocarbon groups linked each other by an ether bond.

In the formula [S-5], g represents an integral number of 2 to 6, R₁₀ represents a hydrocarbon group having a valence of g (excluding an aryl group), and R₁₁ represents an aliphatic group or an aryl group.

In the formula [S-6], R₁₂, R₁₃ and R₁₄ each independently represent hydrogen atom, an aliphatic group, or an aryl group. X represents -CO- or -SO₂-. R₁₂ and R₁₃ or R₁₃ and R₁₄ may be linked each other to form a ring.

In the formula [S-7], R₁₅ represents an aliphatic group, an alkoxycarbonyl group, an aryloxycarbonyl group, an alkylsulfonyl group, an arylsulfonyl group, an aryl group or a cyano group, R₁₆ represents a halogen atom, an aliphatic group, an aryl group, an alkoxy group or an aryloxy group, and h represents an integral number of 0 to 3. When h is two or more, a plurality of R₁₆s may be the same or different.

In the formula [S-8], R₁₇ and R₁₈ each independently represent an aliphatic group or an aryl group, R₁₉ represents a halogen atom, an aliphatic group, an aryl group, an alkoxy group, or an aryloxy group, i represents an integral number of 0 to 5. When i is two or more, a plurality of R₁₉s may be the same or different from each other.

In the formula [S-9], R₂₀ and R₂₁ each independently represent an aliphatic group or an aryl group. j represents 1 or 2. R₂₀ and R₂₁ may be linked each other to form a ring.

In the formulae [S-1] to [S-9], when R₁ to R₆, R₈, R₁₁ to R₂₁ are group containing an aliphatic group or an aliphatic group, the aliphatic group may be straight-chain, branched-chain, or cyclic, and may contain unsaturated bonds or have substituents. Examples of the substituent include a halogen atom, an aryl group, an alkoxy group, an aryloxy group, an alkoxycarbonyl group, a hydroxy group, an acyloxy group, and an epoxy group.

In the formulae [S-1] to [S-9], when R₁ to R₆, R₈, and R₁₁ to R₂₁ are cyclic aliphatic groups, namely cycloalkyl groups or groups containing a cycloalkyl group, the cycloalkyl group may contain unsaturated bonds within a 3- to 8-membered ring, and may have substituents or crosslinking groups. Examples of the substituent include a halogen atom, an aliphatic group, a hydroxy group, an acyl group, an aryl group, an alkoxy group, and an epoxy group, and examples of the crosslinking group include methylene, ethylene, and isopropylidene.

In the formulae [S-1] to [S-9], when R₁ to R₆, R₈, R₁₁ to R₂₁ Ar, are aryl groups or groups containing an aryl group, the aryl group may be substituted with a substituent such as a halogen atom, an aliphatic group, an aryl group, an alkoxy group, an aryloxy group, and alkoxycarbonyl group.

In the formulae [S-3], [S-4], and [S-5], when R₇, R₉ or R₁₀ is a hydrocarbon group, the hydrocarbon group may contain a cyclic structure (e.g., a benzene ring, a cyclopentane ring, a cyclohexane ring) or an unsaturated bond, and may have substituents. Examples of the substituent include a halogen atom, a hydroxy group, an acyloxy group, an aryl group, an alkoxy group, an aryloxy group, and epoxy group.

Among the high boiling point organic solvents represented by the formulae [S-1] to [S-9], the most preferable high boiling point organic solvents are further described below.
In the formula [S-1], R₁, R₂, and R₃ are each independently preferably an aliphatic group having 1 to 24 (preferably 4 to 18) carbon atoms (e.g., n-butyl, n-hexyl, n-octyl, EH-octyl, 2-ethylhexyl, 3,3,5-trimethylhexyl, 3,5,5-trimethylhexyl, n-dodecyl, n-octadecyl, benzyl, oleyl, 2-chloroethyl, 2,3-dichloropropyl, 2-butoxyethyl, 2-phenoxyethyl, cyclopentyl, cyclohexyl, 4-t-butylcyclohexyl, and 4-methylcyclohexyl), or an aryl group having 6 to 24 (preferably 6 to 18) carbon atoms (e.g., phenyl, cresyl, p-nonyl phenyl, xylyl, cumenyl, p-methoxyphenyl, and p-methoxycarbonylphenyl). Among them, R₁, R₂, and R₃ are most preferably n-hexyl, n-octyl, EH-octyl, 2-ethylhexyl, 3,5,5-trimethylhexyl, n-dodecyl, 2-chloroethyl, 2-butoxyethyl, cyclohexyl, phenyl, cresyl, p-nonyl phenyl, or cumenyl.
Each of a, b, and c represents 0 or 1, and more preferably all of a, b, and c are 1.

In the formula [S-2], R₄ and R₅ are each independently preferably an aliphatic group having 1 to 24 (preferably 4 to 18) carbon atoms (e.g., the aliphatic groups as listed for the above-described R₁, heptyl, ethoxycarbonylmethyl, 1,1-diethylpropyl, 2-ethyl-1-methylhexyl, cyclohexylmethyl, 1-ethyl-1,5-dimethylhexyl, 3,5,5-trimethylcyclohexyl, menthyl, bornyl, 1-methylcyclohexyl), or an aryl group having 6 to 24 (preferably 6 to 18) carbon atoms (e.g., the aryl groups as listed for the above-described R₁, 4-t-butylphenyl, 4-t-octylphenyl, 1,3,5-trimethylphenyl, 2,4,-di-t-butylphenyl, and 2,4,-di-t-pentyl phenyl). Among them, R₄ and R₅ are more preferably an aliphatic group, and most preferably n-butyl, heptyl, 2-ethylhexyl, n-dodecyl, 2-butoxyethyl, or ethoxycarbonylmethyl.
R₆ is preferably a halogen atom (preferably, a chlorine atom), an alkyl group having 1 to 18 carbon atoms (e.g., methyl, isopropyl, t-butyl, and n-dodecyl), an alkoxy group having 1 to 18 carbon atoms (e.g., methoxy, n-butoxy, n-octyloxy, methoxyethoxy, and benzyloxy), an aryloxy group having 6 to 18 carbon atoms (e.g., phenoxy, p-tolyloxy, 4-methoxyphenoxy, and 4-t-butylphenoxy), an alkoxycarbonyl group having 2 to 19 carbon atoms (e.g., methoxycarbonyl, n-butoxycarbonyl, 2-ethylhexyloxycarbonyl), or an aryloxycarbonyl group having 6 to 25 carbon atoms. Among them, R₆ is more preferably an alkoxycarbonyl group, and most preferably n-butoxycarbonyl.
d is 0 or 1.

In the formula [S-3], Ar is preferably an aryl group having 6 to 24 (preferably 6 to 18) carbon atoms (e.g., phenyl, 4-chlorophenyl, 2,4-dichlorophenyl, 4-methoxyphenyl, 1-naphthyl, 4-n-butoxyphenyl, 1,3,5-trimethylphenyl, and 2-(2-n-butoxycarbonylphenyl)phenyl). Among them, Ar is more preferably phenyl, 2,4-dichlorophenyl, or 2-(2-n-butoxy carbonyl phenyl)phenyl.
e is an integral number of 1 to 4 (preferably 1 to 3).
R₇ is preferably a hydrocarbon group having a valence of e and having 2 to 24 (preferably 2 to 18) carbon atoms [e.g., the aliphatic groups as listed for the above-described R₄, n-octyl, the aryl groups as listed for the above-described R₄, -(CH₂)₂-, the following groups,

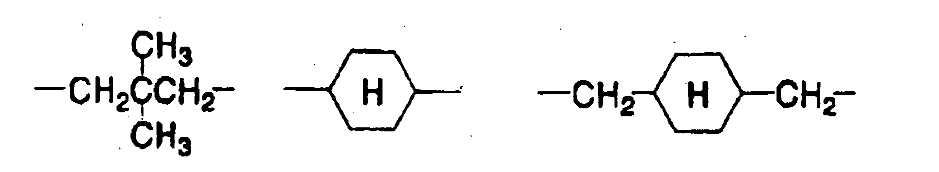

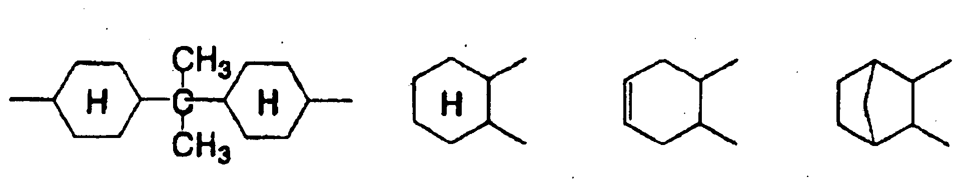

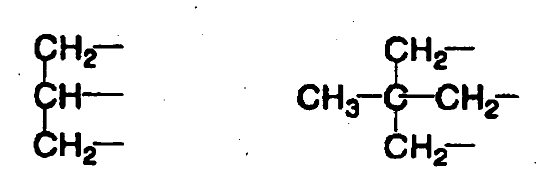

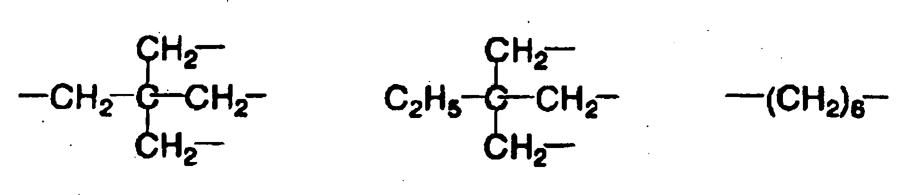

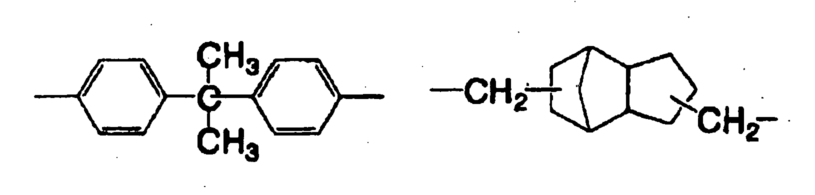

or hydrocarbon groups having a valence of e and having 4 to 24 (preferably 4 to 18) carbon atoms which are linked each other by an ether bond [e.g., -CH₂CH₂OCH₂CH₂-, -CH₂CH₂(OCH₂CH₂)₃-, -CH₂CH₂CH₂OCH₂CH₂CH₂- or the following groups].

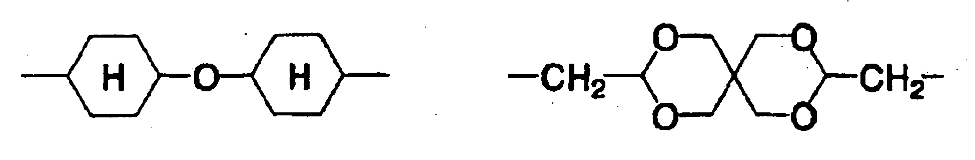

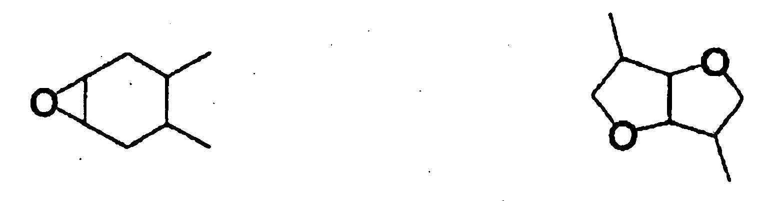

Among them, R₇ is more preferably an alkyl group, and most preferably n-butyl, n-octyl, or 2-ethylhexyl.

In the formula [S-4], R₈ is preferably an aliphatic group having 1 to 24 (preferably 1 to 17) carbon atoms (e.g., methyl, n-propyl, 1-hydroxyethyl, 1-ethylpentyl, n-heptyl, n-undecyl, n-tridecyl, pentadecyl, 8,9-epoxy heptadecyl, cyclopropyl, cyclohexyl, and 4-methylcyclohexyl). Among them, R₈ is most preferably n-heptyl, n-tridecyl, 1-hydroxy ethyl, 1-ethylpentyl, or 8,9-epoxyheptadecyl.
f is an integral number of 1 to 4 (preferably 1 to 3).
R₉ is preferably a hydrocarbon group having a valence of f and having 2 to 24 (preferably 2 to 18) carbon atoms, or hydrocarbon groups having a valence of f and 4 to 24 (preferably 4 to 18) carbon atoms which are linked each other by an ether bond (e.g., the groups as listed for the above-described R₇, 1-methyl-2-methoxyethyl, and 2-hexyldecyl). Among them, R₉ is most preferably 2-ethylhexyl, 2-hexyldecyl, or 1-methyl-2-methoxyethyl or the following groups.

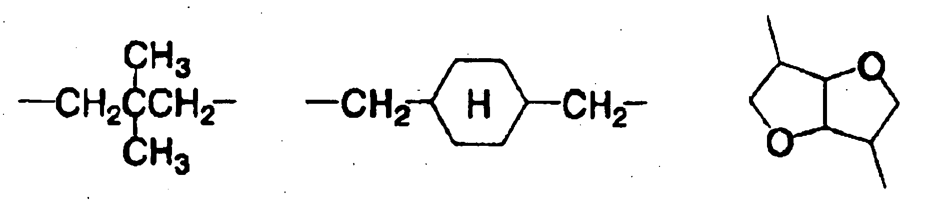

In the formula [S-5], g is 2 to 4 (preferably 2 or 3).
R₁₀ is preferably a hydrocarbon group having a valence of g [for example, -CH₂-, -(CH₂)₂-, -(CH₂)₄-, -(CH₂)₇-, or -(CH₂)₈- or the following groups].

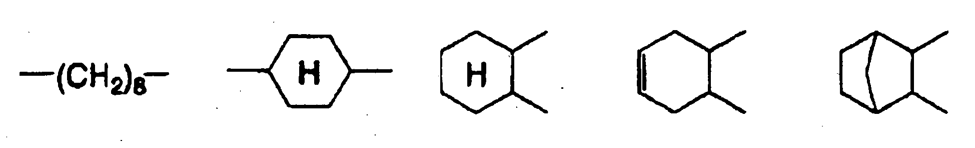

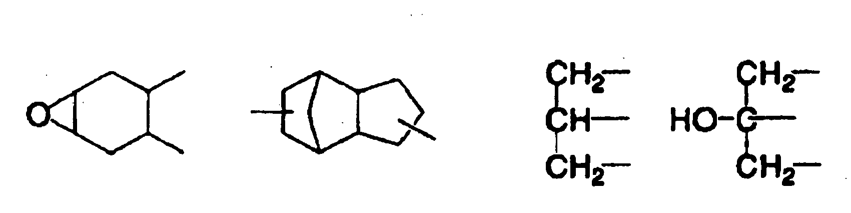

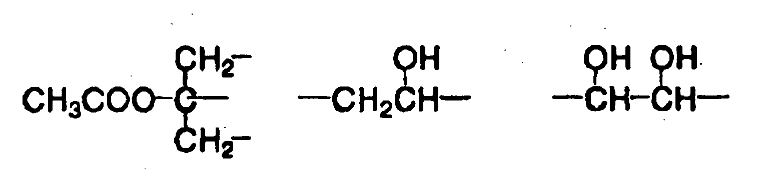

Among them, R₁₀ is most preferably, -(CH₂)₄- or -(CH₂)₈- or the following groups.

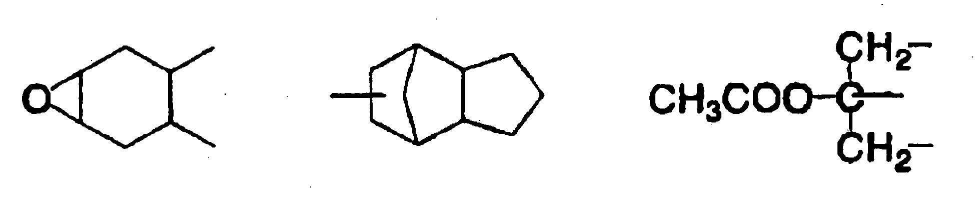

R₁₁ is preferably an aliphatic group having 1 to 24 (preferably 4 to 18) carbon atoms, or aryl group having 6 to 24 (preferably 6 to 18) carbon atoms (e.g., the aliphatic groups and aryl groups as listed for the above-described R₄). Among them, R₁₁ is more preferably an alkyl group, and most preferably n-butyl, n-octyl, or 2-ethylhexyl.

In the formula [S-6], R₁₂ is preferably hydrogen atom, an aliphatic group having 1 to 24 (preferably 3 to 20) carbon atoms [e.g., n-propyl, 1-ethyl pentyl, n-undecyl, n-pentadecyl, 2,4-di-t-pentylphenoxymethyl, 4-t-octylphenoxymethyl, 3-(2,4-di-t-butylphenoxy)propyl, 1-(2,4-di-t-butylphenoxy)propyl, cyclohexyl, 4-methylcyclohexyl, and 8-N,N-diethylcarbamoyloctyl], or an aryl group having 6 to 24 (preferably 6 to 18) carbon atoms (e.g., the aryl group as listed for the above-described Ar, 3-methylphenyl, and 2-(N,N-di-n-octylcarbamoyl)phenyl). Among them, R₁₂ is most preferably n-undecyl, 8-N,N-diethylcarbamoyloctyl, 3-methylphenyl, or 2-(N,N-di-n-octylcarbamoyl)phenyl.
R₁₃ and R₁₄ are each preferably hydrogen atom, an aliphatic group having 1 to 24 (preferably 1 to 18) carbon atoms (e.g., methyl, ethyl, isopropyl, n-butyl, n-hexyl, n-octyl, 2-ethylhexyl, n-dodecyl, n-tetradecyl, cyclopentyl, and cyclopropyl), or an aryl group having 6 to 18 (preferably 6 to 15) carbon atoms (e.g., phenyl, 1-naphthyl, and p-tolyl). Among them, R₁₃ and R₁₄ are each most preferably methyl, ethyl, n-butyl, n-octyl, n-tetradecyl, or phenyl. R₁₃ and R₁₄ may be linked each other to form a pyrrolidine ring, a piperidine ring, or a morpholine ring together with N. R₁₂ and R₁₃ may be linked each other to form a pyrrolidone ring or a piperidine ring together with N.
X is -CO- or -SO₂-, and preferably X is -CO-.

In the formula [S-7], R₁₅ is preferably an aliphatic group having 1 to 24 (preferably 3 to 18) carbon atoms (e.g., methyl, isopropyl, t-butyl, t-pentyl, t-hexyl, t-octyl, 2-butyl, 2-hexyl, 2-octyl, 2-dodecyl, 2-hexadecyl, t-pentadecyl, cyclopentyl, and cyclohexyl), an alkoxycarbonyl group having 2 to 24 (preferably 5 to 17) carbon atoms (e.g., n-butoxycarbonyl, 2-ethylhexyloxycarbonyl, and n-dodecyloxycarbonyl), an aryloxycarbonyl group having 7 to 24 (preferably 7 to 18) carbon atoms (e.g., phenoxycarbonyl group, naphthoxycarbonyl group, and cresyloxycarbonyl group), an alkylsulfonyl group having 1 to 24 (preferably 1 to 18) carbon atoms (e.g., methylsulfonyl, n-butylsulfonyl, and n-dodecylsulfonyl), an arylsulfonyl group having 6 to 30 (preferably 6 to 24) carbon atoms (e.g., p-tolylsulfonyl, p-dodecylphenylsulfonyl, and p-hexadecyloxyphenylsulfonyl), an aryl group having 6 to 32 (preferably 6 to 24) carbon atoms (e.g., phenyl and p-tolyl), or a cyano group. Among them, R₁₅ is more preferably an aliphatic group having 1 to 24 carbon atoms or an alkoxycarbonyl group having 2 to 24 carbon atoms, and most preferably an aliphatic group having 1 to 24 carbon atoms.
R₁₆ is preferably a halogen atom (preferably Cl), an aliphatic group having 1 to 24 (preferably 1 to 18) carbon atoms {more preferably, an alkyl group (e.g., the alkyl group as listed for the above-described R₁₅), a cycloalkyl group having 3 to 18 (more preferably 5 to 17) carbon atoms (e.g., cyclopentyl and cyclohexyl)}, an aryl group having 6 to 32 (preferably 6 to 24) carbon atoms (e.g., phenyl and p-tolyl), an alkoxy group having 1 to 24 (preferably 1 to 18) carbon atoms (e.g., methoxy, n-butoxy, 2-ethylhexyloxy, benzyloxy, n-dodecyloxy, n-hexadecyloxy), or an aryloxy group having 6 to 32 (preferably 6 to 24) carbon atoms (e.g., phenoxy, p-t-butylphenoxy, p-t-octylphenoxy, m-pentadecylphenoxy, and p-dodecyloxyphenoxy). Among them, R₁₆ is more preferably an aliphatic group having 1 to 24 carbon atoms, and most preferably an aliphatic group having 1 to 12 carbon atoms.
h is an integral number of 1 to 2.

In the formula [S-8], preferable examples of R₁₇ and R₁₈ are the same as those listed for the above-described R₁₃ and R₁₄ except for hydrogen atom. Among them, R₁₇ and R₁₈ are each more preferably an aliphatic group, and most preferably n-butyl, n-octyl, or n-dodecyl. R₁₇ and R₁₈ cannot be linked each other to form a ring. Preferable examples of R₁₉ are the same as those listed for the above-described R₁₆. Among them, R₁₉ is more preferably an alkyl group or an alkoxy group, and most preferably n-octyl, methoxy, n-butoxy, or n-octyloxy.
i is an integral number of 1 to 5.

In the formula [S-9], preferable examples of R₂₀ and R₂₁ are the same as those listed for the above-described R₁, R₂, and R₃ when they do not form a ring. Among them, R₂₀ and R₂₁ are most preferably a substituted or nonsubstituted aliphatic group having 1 to 24 carbon atoms. R₂₀ and R₂₁ may be linked each other to form a ring, and the formed ring has preferably 3 to 10 members, and most preferably 5 to 7 members.
j represents 1 or 2, and preferably j is 1.

Specific examples of the high boiling point organic solvent (compounds S-1 to S-53), and the viscosity (measured at temperatures of 25°C and 60°C using the above-described means; mPa·s) and boiling point (°C) of the high boiling point organic solvents are summarized below.
The boiling point of the high boiling point organic solvents has been calculated by converting from the boiling point during distillation under reduced pressure to that under normal pressure. In the following specific examples, the compounds whose boiling point is not shown have been confirmed not to boil at 170°C, and the compounds whose viscosity at 25°C is not shown are solid at 25°C.

| Compound represented by Formula[S-1] | | Viscosity (mPa·s) | | Boiling point(°C) |
|---|---|---|---|---|
| | | (25°C) | (60°C) | |
| S-1 | 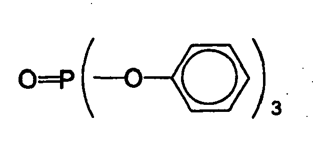 | -- | 8.3 | 370 |
| S-2 | 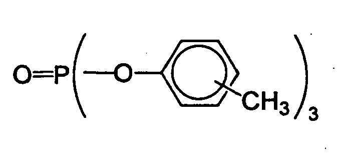 | 57.6 | 11. 8 | 435 |
| S-3 | 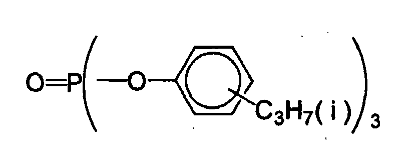 | 95 | 17.5 | 485 |
| S-4 | 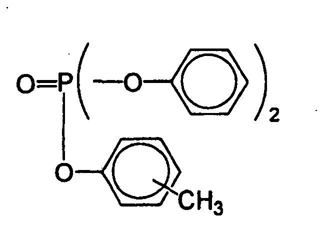 | 65 | 12.8 | 435 |
| S-5 | 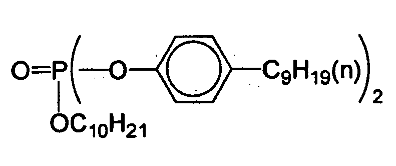 | 49 | 10.3 | 435 |
| S-6 | 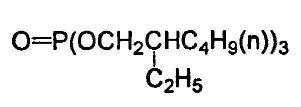 | 11.7 | 4.0 | 390 |
| S-7 | 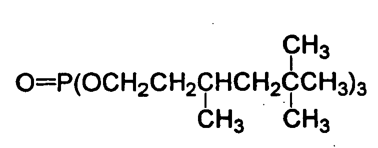 | 20.22 | 5.8 | 420 |
| S-8 | O=P(OC₁₂H₂₅(n))₃ | 28.6 | 6.9 | 480 |
| S-9 | O=P(OC₆H₁₃(n))₃ | 6.62 | 3.0 | 365 |
| S-10 | O=P(OCH₂CH₂Cl)₃ | 20.8 | 5.5 | 360 |
| S-11 | O=P(OCH₂CH₂OC₄H₉(n))₃ | 10.9 | 3.8 | 400 |
| S-1 2 | ((EH)C₈H₁₇)₃P=O | 41.1 | 9.0 | -- |
| S-1 3 | 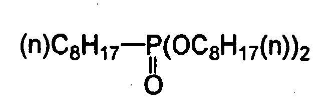 | 13. 7 | 4.3 | -- |
| Compound represented by Formula[S-2] | | | | |
| S-14 | 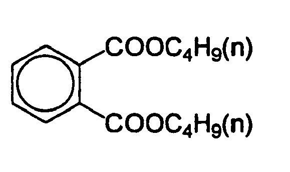 | 20. 3 | 5.1 | 370 |
| S-15 | 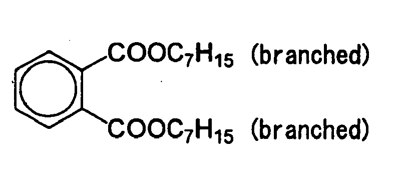 | 34.9 | 8.0 | 380 |
| S-16 | 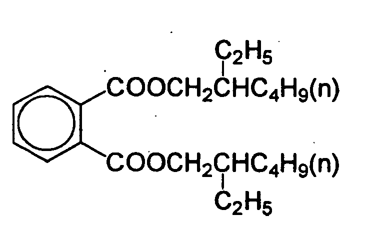 | 62. 7 | 11.7 | 400 |
| S-1 7 | 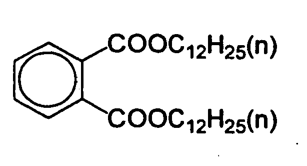 | 52.1 | 10.8 | -- |
| S-18 | 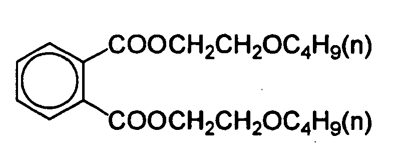 | 42 | 9.1 | 335 |
| S-19 | 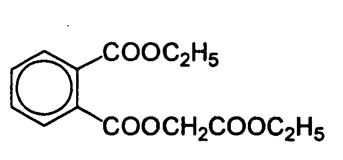 | 74 | 14.2 | 355 |
| S-20 | 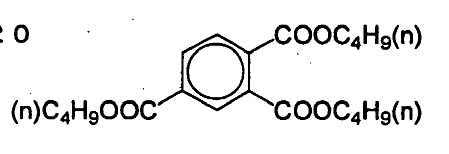 | 55. 7 | 13.1 | 400 |
| Compound represented by Formula[S-3] | | | | |
| S-21 | 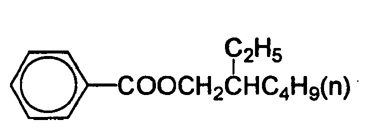 | 5.68 | 2.4 | 300 |
| S-22 | 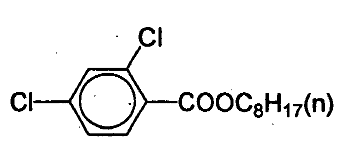 | 11.44 | 3.9 | 360 |
| S-23 | 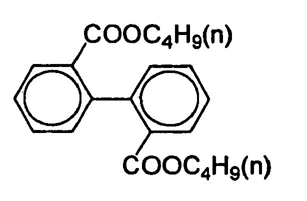 | 51.1 | 10.6 | -- |
| Compound represented by Formula[S-4] | | | | |
| S-24 | 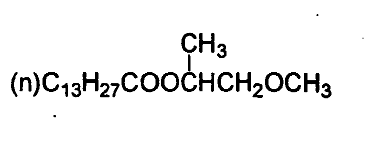 | 7. 17 | 3. 1 | 380 |
| S-25 | 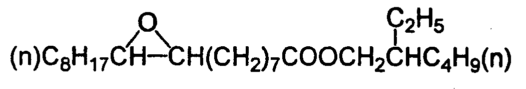 | 39.84 | 8.8 | -- |
| S-26 | 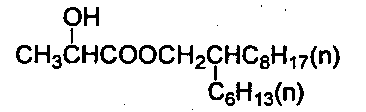 | 22.83 | 5.9 | -- |
| S-27 | 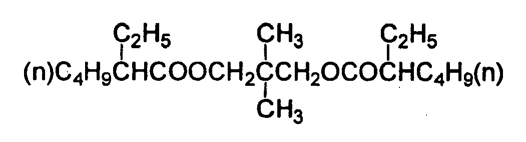 | 12 | 4.0 | -- |
| S-28 | 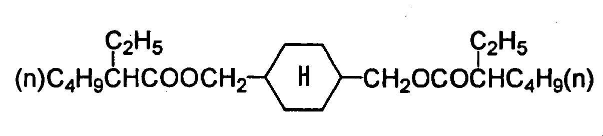 | 41. 4 | 9.0 | 430 |
| S-29 | 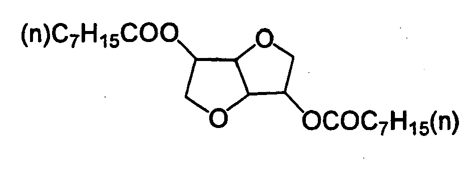 | 47.3 | 10.0 | 440 |
| Compound represented by Formula[S-5] | | | | |
| S-30 | 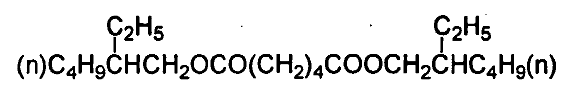 | 11. 7 | 4.3 | 390 |
| S-31 | 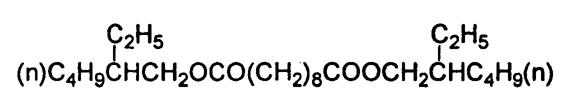 | 19.9 | 6.1 | 410 |
| S-32 | (n)C₄H₉OCO(CH₂)₈COOC₄H₉(n) | 8.09 | 3. 5 | 345 |
| S-33 | 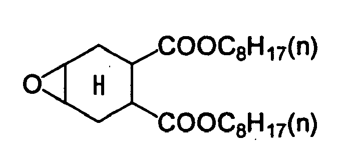 | 88.9 | 16.5 | |
| S-34 | 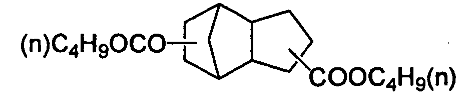 | 37.50 | 8.4 | 440 |
| S-35 | 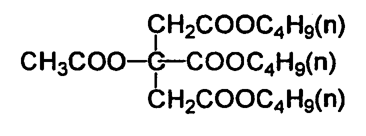 | 42. 7 | 9.3 | 390 |
| Compound represented by Formula[S-6] | | | | |
| S-36 | 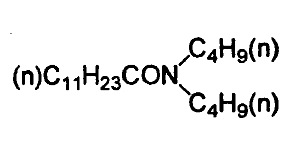 | 9.45 | 3.6 | 340 |
| S-37 | 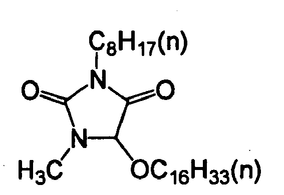 | 45.8 | 9.8 | -- |
| S-38 | 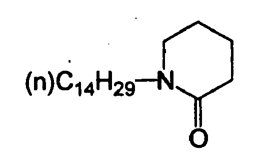 | 20.0 | 5.4 | 350 |
| S-39 | 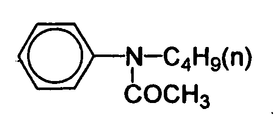 | 12.83 | 4.2 | 320 |
| S-40 | 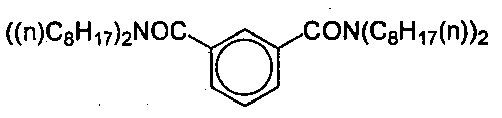 | 77. 1 | 14.7 | -- |
| S-41 | (C₂H₅)₂-NCO-(CH₂)₈-CON(C₂H₅)₂ | 40. 7 | 8. 9 | 405 |
| S-42 | 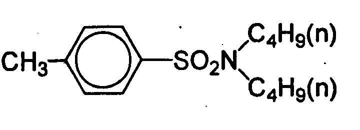 | 49.65 | 10.4 | -- |
| Compound represented by Formula[S-7] | | | | |
| S-43 | 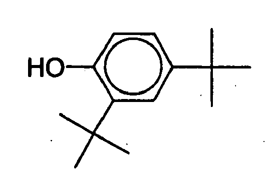 | 92 | 16.9 | |
| Compound represented by Formula[S-8] | | | | |
| S-44 | 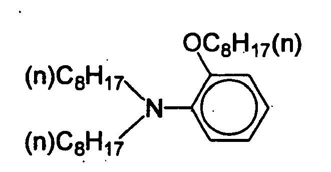 | 15.5 | 4. 6 | |
| S-45 | 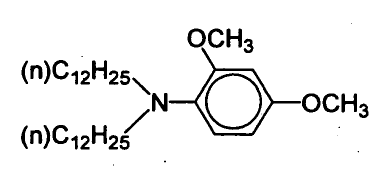 | 27. 1 | 6.6 | |
| S-46 | 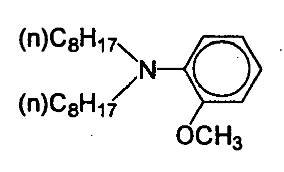 | 35.3 | 8.0 | |
| S-47 | 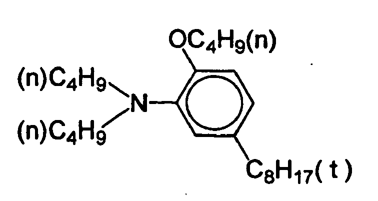 | 79.14 | 15.0 | |
| Compound represented by Formula[S-9] | | | | |
| S-48 | 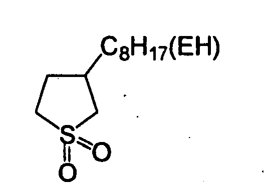 | 37.62 | 8.4 | -- |
| S-49 | 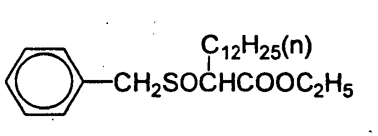 | 43.1 | 9.3 | -- |
| Other compounds | | | | |
| S-50 (for | CₙH₂ₙ₊₁ (normal paraffin, mixture of compounds wherein n is 14 or 15) (for example, "NP-SH", manufactured by Mitsui-Texaco Chemicals) | 2.47 | 0.4 | 260 |
| S-51 | 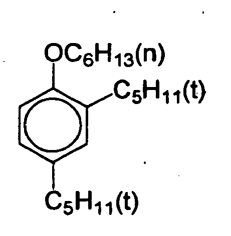 | 35.85 | 8. 1 | 330 |
| S-52 | 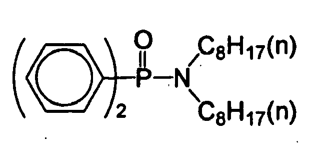 | 45.9 | 9.8 | -- |
| S-53 | 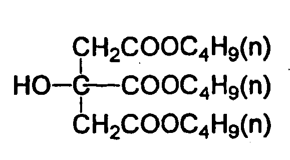 | 25. 82 | 6. 7 | -- |

The high boiling point organic solvent may be used alone or in combination of two or more thereof [e.g., tricresylphosphate and dibutyl phthalate, trioctylphosphate and di(2-ethylhexyl)sebacate, dibutyl phthalate and poly(N-t-butylacrylamide)].

Other examples of the high boiling point organic solvents except for the above-described compounds, and the method for synthesizing these high boiling point organic solvents are, for example, described in U.S. Patent Nos. 2,322,027, 2,533,514, 2,772,163, 2,835,579, 3,594,171, 3,676,137, 3,689,271, 3,700,454, 3,748,141, 3,764,336, 3,765,897, 3,912,515, 3,936,303, 4,004,928, 4,080,209, 4,127,413, 4,193,802, 4,207,393, 4,220,711, 4,239,851, 4,278,757, 4,353,979, 4,363,873, 4,430,421, 4,430,422, 4,464,464, 4,483,918, 4,540,657, 4,684,606, 4,728,599, 4,745,049, 4,935,321, and 5,013,639, European Patent Application Laid-Open (EP-A) Nos. 276,319A, 286,253A, 289,820A, 309,158A, 309,159A, 309,160A, 509,311A, and 510,576A, East German Patent Nos. 147,009, 157,147, 159,573, and 225,240A, U.K. Patent No. 2,091,124A, and JP-A Nos. 48-47335, 50-26530, 51-25133, 51-26036, 51-27921, 51-27922, 51-149028, 52-46816, 53-1520, 53-1521, 53-15127, 53-146622, 54-91325, 54-106228, 54-118246, 55-59464, 56-64333, 56-81836, 59-204041, 61-84641, 62-118345, 62-247364, 63-167357, 63-214744, 63-301941, 64-9452, 64-9454, 64-68745, 1-101543, 1-102454, 2-792, 2-4239, 2-43541, 4-29237, 4-30165, 4-232946, and 4-346338.

In the present invention, high boiling point organic solvents having a boiling point higher than 100°C are preferable, and high boiling point organic solvents having a boiling point higher than 170°C are more preferable.

The amount of the addition of the high boiling point organic solvent to the ink composition is preferably in the range of 50% by mass to 100% by mass, more preferably 70% by mass to 100% by mass, and most preferably 90% by mass to 100% by mass based on the total weight of the liquid.

### <Other Components>

In addition to the above-described components, known additives or the like may be added in accordance with the intended use.

### -Storage stabilizer-

Storage stabilizers may be added to the recording liquid and the ink spread suppressing liquid (preferably recording liquid) according to the present invention for the purpose of inhibiting undesirable polymerization during storage. The storage stabilizers are preferably used in combination with polymerizable or crosslinkable compounds, and are preferably soluble in the contained droplets or liquids, or other coexisting components.

Examples of the storage stabilizer include quaternary ammonium salts, hydroxy amines, cyclic amides, nitriles, substituted ureas, heterocycle compounds, organic acids, hydroquinone, hydroquinone monoethers, organic phosphines, and copper compounds. Specific examples thereof include benzyltrimethylammonium chloride, diethylhydroxylamine, benzothiazole, 4-amino-2,2,6,6-tetramethylpiperidine, citric acid, hydroquinone monomethyl ether, hydroquinone monobutyl ether, and copper naphthenate.

The amount of addition of the storage stabilizer is preferably adjusted on the basis of the activity of the polymerization initiator, polymerizability of the polymerizable or crosslinkable compounds, and the kind of the storage stabilizer, and preferably 0.005 to 1% by mass, more preferably 0.01 to 0.5% by mass, and further preferably 0.01 to 0.2% by mass on the basis of the solid content in the liquid, from the viewpoint of the balance between the storage stability and curability.

### -Electrically conductive salts-

Electrically conductive salts are solid compounds for improving electrical conductivity. In the present invention, it is preferable not to substantially use the salts because they tend to precipitate during storage. However, they may be added in an appropriated amount when the solubility of the electrically conductive salts is improved by increasing the solubility of electrically conductive salts or using solvents with high solubility to the electrically conductive salts.
Examples of the above-described electrically conductive salts include potassium thiocyanate, lithium nitrate, ammonium thiocyanate, and dimethylamine hydrochloride salt.

### -Solvent-

In the present invention, solvents other than the above-described high boiling point organic solvents may be used. The solvents can be used for the purposes of adjusting the polarity, viscosity, and surface tension of the liquid (ink), improving the solubility and dispersibility of the colorants, adjusting electrical conductivity, and adjusting printing performance.
The solvents are preferably water-insoluble liquids containing no aqueous solvent for quick-drying properties and recording a high quality image having a uniform line width, thus the liquid (ink) preferably comprise an above-described high boiling point organic solvent.

Examples of the solvent include low-boiling organic solvents having a boiling point of 100°C or lower, but it is preferable not use such low-boiling organic solvents because they may affect the curability and may cause environmental pollution. If a low-boiling organic solvent is used, it is preferable to use a highly safe one. Highly safe solvents are solvents for which a high control concentration (an index defined in the work environmental evaluation criteria) has been defined. The control concentration is preferably 100 ppm or higher, more preferably 200 ppm or higher. Examples of the highly safe solvents include alcohols, ketones, esters, ethers, and hydrocarbon, and specific examples thereof include methanol, 2-butanol, acetone, methyl ethyl ketone, ethyl acetate, and tetrahydrofuran.

The solvents may be used alone or in combination of two or more thereof. However, when at least one of water and a low-boiling organic solvent is used, the content of them in each liquid is preferably 0 to 20% by mass, more preferably 0 to 10% by mass, and most preferably substantially free. It is not preferable that the recording liquid and the ink spread suppressing liquid according to the present invention contain water from the viewpoints of temporal stability such as development of unevenness with time, and development of liquid turbidity due to precipitation of dyes, and drying properties on an impermeable or slow-permeable recording medium. Substantially free means that the presence of inevitable impurities is acceptable.

### -Other additives-

Furthermore, known additives such as a polymer, a surface tension adjuster, an ultraviolet absorbing agent, an antioxidant, an antifading agent, and pH adjuster may be added into the ink composition.
As surface tension adjusters, ultraviolet absorbing agent, antioxidant, antifading agent, and pH adjuster, known compounds may be used as appropriate. Specific examples thereof include the additives as described in JP-A No. 2001-181549.

The ink composition may further contain a polymer compound selected from various polymer compounds for the purpose of the adjustment of the film physical properties. Examples of polymer compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinyl resins, acrylic resins, rubber resin, waxes, and other natural resins. The polymer compounds may be used in combination of two or more thereof.
One or more substances selected from nonionic surfactants, cationic surfactants, and organic fluorocompounds may be added to control the liquid properties.
Other examples of usable additives, which may be added as necessary, include leveling additives, matting agents, waxes for controlling the film properties, and tackifiers, which do not inhibit polymerization, for improving the adhesion to recording media such as polyolefin and PET.

In addition to the above-described compounds, a pair of compounds which react with each other by mixing to form an aggregate or thicken may be separately contained in the recording liquid and the ink spread suppressing liquid according to the present invention. The above-described pair of compounds has properties of rapidly forming an aggregate or rapidly thickening the liquid, thereby coalescence between neighboring droplets is more effectively inhibited.
Examples of the reaction between the above-described pair of compounds include an acid-base reaction, a hydrogen bond reaction between a carboxylic acid group-containing compound and an amide, a crosslinking reaction such as those between boronic acid and a diol, and a reaction by electrostatic interaction between a cation and an anion.
However, the concentration of the pair of compounds above is preferably 20 % by mass or less, more preferably 10 % by mass or less, and particularly preferably none, with respect to the total weight of the ink set from the viewpoint of safety.

### (Ink-jet recording method)

Hereinafter, the ink-jet recording method according to the invention will be described.
The ink-jet recording method according to the invention include applying the recording liquid and the ink spread suppressing liquid on a recording medium to form an image by using the ink-jet recording ink set according to the invention (image forming step) and hardening the formed image by applying energy thereto (hardening step).

As described above, when the ink-jet recording ink set is used, the ink spread suppressing liquid and the recording liquid overlaps and are mixed with each other on the recording medium, whereby a curing reaction of the polymerizable compound proceeds and image formation is carried out. Application of the energy then accelerates the polymerization and curing reaction, assuring efficient formation of a stronger image. Such energy is preferably applied by photoirradiation or heating.

### -Image forming step-

In the image forming process, an image is formed according to a known recording method by using the ink-jet recording ink set, but the ink nozzle and others for use in the ink-jet recording method according to the invention are not particularly limited, and may be selected properly according to applications.

Any ink-jet recording process may be applied to the ink-jet recording method according to the invention. Examples thereof include an electric charge-controlled method of ejecting ink by electrostatic attraction, a drop-on-demand method (pressure pulse method) of using the vibrational pressure of a piezoelectric element, an acoustic ink-jet method of ejecting ink by converting electric information into acoustic beams, irradiating the beams on ink, and generating an radiation pressure, a thermal ink-jet method (bubble jet (registered trademark)) of forming air bubbles by the pressure generated by heating, and the like.
The ink-jet recording process also include a method of ejecting a so-called low-concentration photo ink multiple times in droplets in smaller volume, a method of improving image quality by using multiple different inks that are substantially the same in color tone and different concentration, and a method of using a transparent colorless ink.

In the ink-jet recording method according to the invention, an image is preferably formed by applying the ink spread suppressing liquid on an area corresponding to the image to be formed on the recording medium with droplets of the recording liquid or an area wider than the area corresponding to the image, before application of the droplets of the recording liquid
More preferably, after application of droplet n1 of the recording liquid, the next droplet n2 of the recording liquid is applied on the area overlapping the droplet n1, and the ink spread suppressing liquid is applied on an area corresponding to the image to be formed on the recording medium with droplets of the recording liquid or an area wider than the area corresponding to the image, before application of the droplets of the recording liquid.
Specifically, preferable is a method of forming a desired image by applying droplets of the recording liquid n1, n2 and so on, on the recording medium from an ink ejection nozzle (head) of ink-jet printer. The recording liquid preferably contains at least a colorant and a polymerizable compound for forming a desirable image, and droplets n1 and n2 are preferably applied respectively at the positions overlapping each other during application for obtaining a high image density. Then, an ink spread suppressing liquid containing a surfactant and substantially no colorant is applied on the same area where the desired image is to be formed on the recording medium or an area wider than that before application of the droplets n1 and n2.

The recording medium used in the ink-jet recording method according to the invention is not particularly limited, as will be described below, and may be an impermeable to slow-permeable recording medium. When an image is recorded on such a less ink-absorbing recording medium, neighboring droplets (n1 and n2) applied as overlapped for obtaining a high-density image may fuse to each other when in contact with each other on the medium before drying, causing image bleeding and fluctuation of thin line width, prohibiting formation of high-definition image.
By using the ink-jet recording ink set according to the invention, it is possible to prevent the fusion between the droplets n1 and n2 and to prevent image bleeding and fluctuation in the width of thin line image even when droplets n1 and 2 of the recording liquid are applied on the same region as overlapping each other. As a result, it is possible to form a high-definition line having a uniform width while preserving the density of the high-density image and thus to record a high-quality image. The image is less tacky and superior in abrasion resistance.

The impermeable recording medium refers to a medium which is substantially impermeable to droplets. "Substantially impermeable" means that the permeation rate measured one minutes after ink deposition is 5% or less. The slow-permeable recording medium refers to a medium on which the complete permeation of 10 pl (pico liter; hereinafter the same shall apply) of droplets takes 100 m seconds or more, and specific examples thereof include art paper. The detail of the impermeable or slow-permeable recording medium will be described later.
Permeable recording medium refers to a medium on which the complete permeation of 10 pl of droplets takes 100 m seconds or less, and specific examples thereof include plain paper and porous paper.

In forming an image in the invention, recording liquids including the droplets n1 and n2 and an ink spread suppressing liquid different in composition therefrom are used in combination. The droplets n1 and n2 of the recording liquid means droplets n1, n2, n3 and so on up to nx ejected from an ink ejection nozzle by using the same recording liquid as they overlap each other. The droplets may be ejected simultaneously or stepwise, but preferably stepwise.

In the ink-jet recording method according to the invention, droplets n1 and n2 of the recording liquid described above are preferably ejected, for example, through an ink-jet nozzle, but the recording liquid may not be ejected through an ink-jet nozzle but may be applied by other means such as coating.

Hereinafter, the method of applying the ink spread suppressing liquid on a recording medium will be described. In the description below, a method of using an ink-jet nozzle was used as the method of applying the droplets n1 and n2 of the recording liquid as described above. Typical examples are shown below.

### (i) Application with coater

It is a preferable embodiment that the ink spread suppressing liquid is applied to a recording medium using a coater, subsequently the droplets a1 and a2 (the recording liquid) are applied by an ink-jet nozzle to record an image.

The coater is not particularly limited, and can be appropriately selected from known coaters according to the intended use. Examples of the coater include an air doctor coater, a blade coater, a rod coater, a knife coater, a squeeze coater, an impregnation coater, a reverse roll coater, a transfer roll coater, a gravure coater, a kiss-roll coater, a cast coater, a spray coater, a curtain coater, and an extrusion coater. Details of the method may be referenced in "Coating Kogaku (Coating Engineering)", by Yuji Harasaki.
The ink jet nozzle is not particularly limited, and can be appropriately selected from known nozzles according to the intended use. The ejection by the ink jet nozzle will be described later.

Furthermore, liquids other than the droplet n1 and droplet n2 of the recording liquid, and the ink spread suppressing liquid may be used for forming an image. The other liquids may be applied to a recording medium by any methods such as the above-described coating using coaters or ejection using an ink jet nozzle. The timing of application is not particularly limited. Another liquid containing a colorant is preferably injected using an ink jet nozzle, and preferably applied after applying the ink spread suppressing liquid.

### (ii) Ejection with ink jet nozzle

It is a preferred embodiment to record an image by applying the ink spread suppressing liquid as droplet b1, droplet b2, droplet b3 and so on up to droplet bx using an ink jet nozzle, followed by applying the droplet n1, droplet n2, droplet n3 and so on up to droplet nx of the recording liquid using an ink jet nozzle. The ink jet nozzle is the same as described above.

In such a case too, the liquid other than the droplets n1 and n2 of the recording liquid and the ink spread suppressing liquid may be applied on the recording medium in any way, for example, in a coating machine or by ejection through an ink-jet nozzle, and the timing of application is also not particularly limited. When the other liquid contains a colorant, it is preferably applied by ejection through an ink-jet nozzle, preferably, additionally after application of the ink spread suppressing liquid through a nozzle.
The method of ejection through ink-jet nozzle (ink-jet recording process) is the same as that above.

In instances where the above-described application means (i) is used, at least the droplet n1 and droplet n2 of the recording liquid are applied by the ink jet recording process on the ink spread suppressing liquid which has been applied on the recording medium in advance, thereby an image is formed. In instances where the above-described application means (ii) is used, at least the droplet n1 and the droplet n2 of the recording liquid are applied by the ink jet recording process on the ink spread suppressing liquid which has been applied on the recording medium by the ink jet recording process in advance, thereby an image is formed.

In the present invention, the droplet n1 and droplet n2 has an overlap portion, which increases the number of applied droplets per unit length, and thereby allows image recording at a high resolution. In this instance, it is preferable to apply the droplet n1 and droplet n2 within 1 second after applying the ink spread suppressing liquid on a recording medium.

The overlap ratio of droplets at an overlap portion refers to a value measured at the time of 1 second after at least the droplet n1 and droplet n2 are overlappedly applied. In particular, the overlap ratio at an overlap portion at the time of 1 second after the application of the droplet n2, which is applied after the application of the droplet n1, is preferably 10 % to 90 %, since it is effective for image recording with higher resolution.
Furthermore, the overlap ratio is more preferably 20% to 80%, and furthermore preferably 30% to 70%.

The above-described overlap ratio is an index showing the ratio of overlapping between neighboring droplets (droplet n1, droplet n2 and so on). When the diameter of a droplet applied on a recording medium is set at a and the portion of 1/2a is overlapped, the overlap ratio is 50%. In the present invention, neighboringly applied droplets can keep the applied shape without causing coalescence, and the overlap ratio is represented by 100 x (2b-c)/2b [%], wherein b is the radius of the droplet measured at point in time of 1 second after application, and c is the distance interval of the neighboringly applied droplets.

The amount of application of the droplet n1 and the droplet n2 is not particularly limited, and can be selected in accordance with the sharpness of the image to be formed. Usually, the amount is preferably about 0.5 pl to 10 pl per one droplet. Furthermore, application of the ink spread suppressing liquid is not particularly limited as long as it is applied to the same area with or a wider area than the image area formed by the droplet n1 and droplet n2 of the recording liquid.

Concerning the proportion of the applied amount of the ink spread suppressing liquid per one droplet of the droplet n1 and the droplet n2 of the recording liquid, when the amount of the droplet n1 or droplet n2 is 1, the amount of application of the ink spread suppressing liquid (mass ratio) is preferably in the range of 0.05 to 5, more preferably in the range of 0.07 to 1, and most preferably in the range of 0.1 to 1.

At least one of the droplet n1 and droplet n2 of the recording liquid is preferably applied at a droplet size of 0.1 pl to 100 pl (preferably from an ink jet nozzle). When the droplet size is within the above-described range, an image with high sharpness can be advantageously formed at a high density. Furthermore, the size is more preferably 0.5 pl to 50 pl.

A time interval between the finishing point of the application of the ink spread suppressing liquid and the starting point of the application of droplet n1 of the recording liquid is in the range of 5 µ seconds to 400 m seconds. When the time interval is within the above-described range, the effect of the present invention is advantageously achieved. The time interval is more preferably 10µ, seconds to 300 m seconds, and most preferably 20 µ seconds to 200 µ seconds.
In the ink-jet recording method according to the invention, the forming of the image is preferably a single-pass process. The single-pass process is an image forming method of forming an image on the entire surface of the recording medium by using a full-line head covering the entire area of the recording medium and moving the full-line head relative to the recording medium only once. Examples of such a single-pass process are described in JP-A Nos. 2005-96443 and 2005-280346.

### -Hardening step-

In the method according to the invention, the formed image is hardened by application of energy as described above after applying an ink spread suppressing liquid and then recording liquids (droplets n1 and n2) from the viewpoint that it is possible to obtain better fixing efficiency. In addition, the energy is preferably applied only once, for reduction in energy consumption and improvement in printing speed.
The application of energy promotes the curing reaction due to polymerization or crosslinking of the polymerizable compound contained in the liquids; thereby a more solid image is more effectively formed. For example, in a system containing a polymerization initiator, the application of active energy such as activation light and heat promotes the generation of active species due to the decomposition of the polymerization initiator, and the increased active species and temperature promote the curing reaction of the polymerizable compound due to polymerization or crosslinking caused by the active species.
The application of energy may be appropriately carried out by activation light irradiation or heating.

As the above-described activation light, for example, ultraviolet light, visible light, as well as α ray, γ ray, X ray, and electron beam or the like may be used. Among them, ultraviolet light and visible light are preferable, and ultraviolet light is most preferable from the viewpoints of cost and safety.
While the amount of energy necessary for curing reaction is different depending on the kind and content of the polymerization initiator, it is usually about 1 to 500 mJ/cm².

When energy is applied by heating, the heating treatment is preferably carried out for 0.1 to 1 second under conditions that the surface temperature of the recording medium is in the range of 40 to 80°C.
The heating treatment may be carried out by a non-contact type heating method. Preferable examples of the heating method include a heating method of passing through a heating furnace such as an oven, and a heating method by whole surface exposure with ultraviolet light to visible light to infrared light or the like. Examples of the light source suitable for exposure as a heating method include a metal halide lamp, a xenon lamp, a tungsten lamp, a carbon arc lamp, and a mercury lamp.

### -Recording medium-

The recording medium may be used without any limitation; however, an impermeable or slow-permeable recording medium is preferably used from the viewpoint of remarkably achieving the effects of the invention.
Examples of the impermeable recording medium include synthetic resins, rubber, resin coated paper, glass, metal, ceramic, and wood. Furthermore, these materials may be used in combination of two or more thereof as composite substrates for the purpose of adding functions.

As the above-described synthetic resin, any synthesis resins may be used. Examples thereof include polyester such as polyethylene terephthalate, and polybutadiene terephthalate, polyolefin such as polyvinyl chloride, polystyrene, polyethylene, polyurethane, and polypropylene, acrylic resin, polycarbonate, acrylonitrile-butadiene-styrene copolymer, diacetate, triacetate, polyimide, cellophane, and celluloid. The thickness and shape of these synthesis resins are not particularly limited, and the shape may be either film, card, or block form. Furthermore, the resins may be either transparent or opaque.

The above-described synthesis resin is preferably used in film form which is suitable for so-called soft packaging, and examples thereof include various non-absorbing plastics and films thereof. Examples of the plastic film include a PET film, an OPS film, an OPP film, a PNy film, a PVC film, a PE film, and a TAC film. Other examples of the plastics include polycarbonate, acrylic resin. ABS. polyacetal, PVA, and rubbers.

Examples of the above-described resin coated paper include a transparent polyester film, an opaque polyester film, an opaque polyolefin resin film, and a paper support laminated with a polyolefin resin on both sides. Among them, a paper support laminated with a polyolefin resin on both side surfaces is most preferable.

The above-described metal is not particularly limited, and preferable examples thereof include aluminum, iron, gold, silver, copper, nickel, titanium, chromium, molybdenum, silicon, lead, zinc, stainless steel, and composite materials thereof.

Furthermore, read-only optical disks such as CD-ROM and DVD-ROM, write-once optical disks such as CD-R and DVD-R, and re-writable optical disks can be used, and an ink receiving layer and a brightening layer may be added to the label surface.

Hereinafter, favorable embodiments of the invention will be described, but the invention is not limited thereto.
<1> An ink-jet recording ink set, comprising: at least one recording liquid that comprises a polymerizable compound and a colorant; and an ink spread suppressing liquid that comprises a nonionic fluorinated surfactant and does not substantially contain a colorant; wherein a ratio of a content M1 of the nonionic fluorinated surfactant in the recording liquid to a content M2 of the nonionic fluorinated surfactant in the ink spread suppressing liquid satisfies M1/M2 < 1 and a molecular weight of the nonionic fluorinated surfactant contained in the ink spread suppressing liquid is 10,000 or more and 100,000 or less .
<2> The ink-jet recording ink set of <1>, wherein the recording liquid does not contain the nonionic fluorinated surfactant.
The ink-jet recording ink set of <1>, wherein the surface tension of the recording liquid is larger than that of the ink spread suppressing liquid.
<4> The ink-jet recording ink set of <1>, wherein the nonionic fluorinated surfactant contained in the ink spread suppressing liquid is a copolymer of a monomer expressed by the following formula (a) and a monomer expressed by the following formula (b): 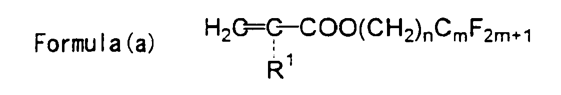 wherein, in the formula (a), R¹ represents a hydrogen atom or a methyl group, n denotes an integer from 1 to 18, and m denotes an integer from 2 to 14, 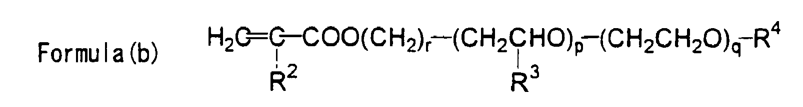 wherein, in the formula (b), R² and R³ each independently represent a hydrogen atom or a methyl group; R⁴ represents a hydrogen atom, an alkyl group having 1 to 5 carbon atoms, or a hydroxyl group; p, q and r each independently denote an integer from 0 to 18; and p and q are not zero simultaneously.
<5> The ink-jet recording ink set of <1>, wherein at least one of the recording liquid and the ink spread suppressing liquid contains a polymerization initiator.
<6> The ink-jet recording ink set of <1>, wherein the polymerizable compound is nonaqueous.
<7> An ink-jet recording method using an ink-jet recording ink set comprising at least one recording liquid that comprises a polymerizable compound and a colorant and an ink spread suppressing liquid that comprises a nonionic fluorinated surfactant and does not substantially contain a colorant, wherein a ratio of a content M1 of the nonionic fluorinated surfactant in the recording liquid to a content M2 of the nonionic fluorinated surfactant in the ink spread suppressing liquid satisfies M1/M2 < 1 and a molecular weight of the nonionic fluorinated surfactant contained in the ink spread suppressing liquid is 10.000 or more and 100.000 or less , the method comprising: applying the recording liquid and the ink spread suppressing liquid on a recording medium to form an image; and hardening the formed image by applying energy thereto.
<8> The ink-jet recording method of <7>, wherein the ink spread suppressing liquid is applied on an area corresponding to the image to be formed on the recording medium with droplets of the recording liquid or an area wider than the area corresponding to the image, before application of the droplets of the recording liquid.
<9> The ink-jet recording method of *<*7>, wherein the energy is applied by photoirradiation or heating.
<10> The ink-jet recording method of <7>, wherein the recording liquid does not contain the nonionic fluorinated surfactant.
<11> The ink-jet recording method of <7>, wherein the surface tension of the recording liquid is larger than that of the ink spread suppressing liquid.
<12> The ink-jet recording method of <7>, wherein the nonionic fluorinated surfactant contained in the ink spread suppressing liquid is a copolymer of a monomer expressed by the following formula (a) and a monomer expressed by the following formula (b): 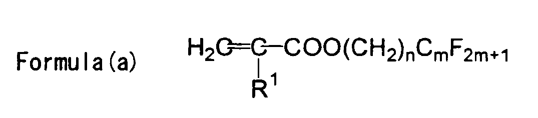 wherein, in the formula (a), R¹ represents a hydrogen atom or a methyl group, n denotes an integer from 1 to 18, and m denotes an integer from 2 to 14, 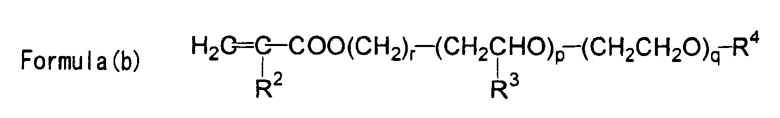 wherein, in the formula (b), R² and R³ each independently represent a hydrogen atom or a methyl group; R⁴ represents a hydrogen atom, an alkyl group having 1 to 5 carbon atoms, or a hydroxyl group; p, q and r each independently denote an integer from 0 to 18; and p and q are not zero simultaneously.
<13> The ink-jet recording method of <7>, wherein at least one of the recording liquid and the ink spread suppressing liquid contains a polymerization initiator.
<14> The ink-jet recording method of <7>, wherein the polymerizable compound is nonaqueous.

### EXAMPLE

In what follows, the present invention will be more specifically described with reference to examples. However, the invention, as far as it does not exceed the gist thereof, is not restricted to examples below.

### <Preparation of Colorant Dispersion A>

16 g of PB 15:3 (IRGALITE BLUE GLO, manufactured by Ciba Specialty Chemicals), 48 g of 1,6-hexanediol diacrylate (manufactured by Daicel SciTech), and 16 g of BYK-168 (manufactured by BYK-Chemie) were mixed and agitated by stirrer for 1 hour. The mixture after agitating was dispersed in an Eiger mill, to give a pigment dispersion A. Dispersion was performed by using zirconia beads having a diameter of 0.65 mm at a filling factor of 70% under the condition of a peripheral speed of 9 m/s and a period of 1 hour. Processing in the steps above gave a cyan pigment dispersion A.

### <Preparation of Recording Liquid>

Components shown in Table 1 below were agitated and mixed to dissolve at concentrations shown in Table 1 to obtain recording liquids I-1 through 1-6. Furthermore, as recording liquids I-7 and I-8, commercially available inks shown in Table 1 were used.
The surface tension of each of the recording liquids I-1 through 1-6 was measured by means of the Wilhelmy method and values shown in Table 1 were obtained. Furthermore, the sp values of the recording liquids I-1 through 1-6 were calculated by means of the Hoy method and found all to be 19.8.

**[Table 1]**

| Recording Liquid | Polymerizable Compound A (wt%) | Pigment Dispersion A (wt%) | Surfactant B (wt%) | Surface Tension (mN/m) |
|---|---|---|---|---|
| I-1 | 50.0 | 50.0 | Nothing added | 34.5 |
| I-2 | 49.9 | 50.0 | 0.1 | 31.1 |
| I-3 | 49.5 | 50.0 | 0.5 | 28.9 |
| I-4 | 49.0 | 50.0 | 1.0 | 24.3 |
| 1-5 | 48.0 | 50.0 | 2.0 | 22.5 |
| I-6 | 47.5 | 50.0 | 2.5 | 21.5 |
| I-7 | Commercially available Magenta UV Ink (trade name: SPC-0371M, produced by MIMAKI Corp.) | | | |
| I-8 | Commercially available Black UV Ink (trade name: SPC-0371K2, produced by MIMAKI Corp.) | | | |

### <<Description of Signs in Table 1>>

Polymerizable compound A: 1,6-hexanediol diacrylate (trade name: HDODA, produced by Daicel SciTech)
Surfactant B: A nonionic fluorinated surfactant shown in following Table 3.

### <Preparation of Ink Spread Suppressing Liquid>

Components shown in Table 2 below were agitated and mixed to dissolve at concentrations shown in Table 2 to obtain ink spread suppressing liquids II-1 through II-11. The surface tension of each of the ink spread suppressing liquids II-1 through II-11 was measured by means of the Wilhelmy method and values shown in Table 2 were obtained. Furthermore, the sp values of the ink spread suppressing liquids II-1 through II-11 were calculated by means of the Hoy method and found all to be 19.8.

**[Table 2]**

| Ink spread suppressing liquid | Polymerizable Compound A (wt%) | Polymerization Initiator A (wt%) | Surfactant | | Surface Tension (mN/m) |
|---|---|---|---|---|---|
| | | | Concentration (wt%) | Kind | |
| II-1 | 93.0 | 5.0 | 2.0 | Surfactant A | 22.6 |
| II-2 | 93.0 | 5.0 | 2.0 | surfactant B | 22.2 |
| II-3 | 93.0 | 5.0 | 2.0 | Surfactant C | 23.2 |
| II-4 | 93.0 | 5.0 | 2.0 | Surfactant D | 24.8 |
| II-5 | 93.0 | 5.0 | 2.0 | Surfactant E | 28.8 |
| II-6 | 93.0 | 5.0 | 2.0 | Surfactant F | 28.5 |
| II-7 | 93.0 | 5.0 | 2.0 | Surfactant G | 34.2 |
| II-8 | 93.0 | 5.0 | 2.0 | Surfactant H | 34.7 |
| II-9 | 93.0 | 5.0 | 2.0 | Surfactant I | 32.8 |
| II-10 | 93.0 | 5.0 | 2.0 | Surfactant J | 32.5 |
| II-11 | 93.0 | 5.0 | - | Nothing added | 35.4 |

### <<Description of Signs in Table 2>>

Polymerizable Compound A: 1,6-hexanediol diacrylate (trade name: HDODA, produced by Daicel SciTech)
Polymerization Initiator A: TPO-L (polymerization initiator-1 below)
Surfactants A through F: Nonionic fluorinated surfactants shown in Table 3 below
Surfactant G: Anionic fluorinated surfactant (trade name: Megaface F 114, produced by Dainippon Ink and Chemicals Incorporated)
Surfactant H: Anionic fluorinated surfactant (surfactant-1 below)
Surfactant I: Hydrocarbon-based surfactant (poly(2-ethylhexyl acrylate))
Surfactant J: Hydrocarbon-based surfactant (sodium sulfosuccinate di-2-ethylhexyl)

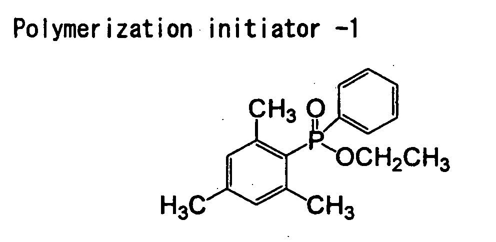

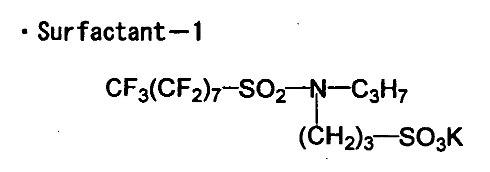

As the nonionic fluorinated surfactants A through F described in the Tables 1 and 2, ones shown in Table 3 below were used.

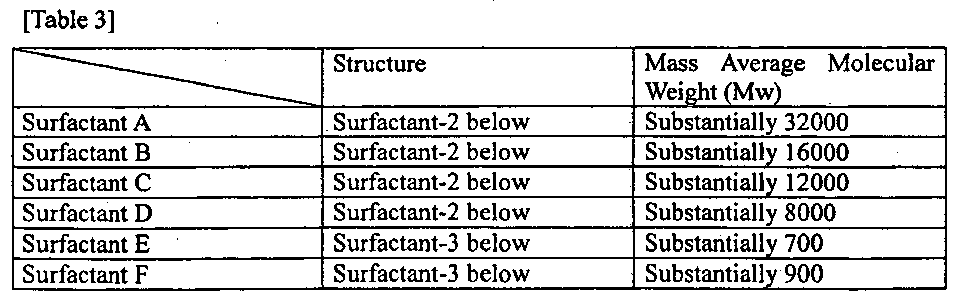

### • Surfactant-2

A copolymer of compounds expressed
by following formulae (a) -1 and (b) -1.

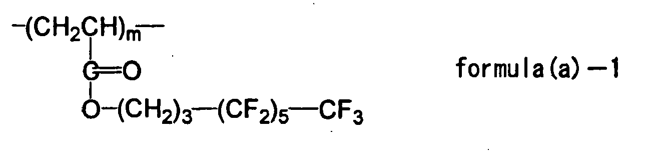

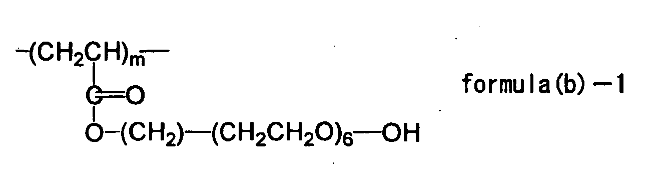

In the formulae (a)-1 and (b)-1, m denotes an integer from 10 to 50.

### • Surfactant-3

CF₃-(CF₂)ₙ-CH₂-CH₂-(OCH₂CH₂)ₙ-OH formula (c)

In the formula (c), n denotes an integer from 6 to 8.

### <Image Recording>

### [Example 1]

Prepared recording liquid I-3 and ink spread suppressing liquid II-1 were charged in an ink-jet printer (experimental machine that mounts a head produced by Toshiba Tec Co., Ltd., printing density: 300dpi, droplet ejection frequency: 2KHz, number of nozzles: 64, two row array). In what follows, in some cases, a combination of the recording liquid 1-3 and the ink spread suppressing liquid II-1 is referred to as [ink set I-3/II-1].
In the next place, from a head charged with the ink spread suppressing liquid II-1, the ink spread suppressing liquid II-1 is uniformly applied on an entire surface of a recording medium. Thereon, from a head charged with the recording liquid I-3, characters (font size of 12, 24 and 48) and lattice patterns (in lines with a width of 1 pixel, 2 pixels or 3 pixels) were printed. At this time, a droplet of the recording liquid was printed so as to overlap with a droplet of the ink spread suppressing liquid on the recording medium. Furthermore, the printings were carried out at overlap ratio of a droplet n1 and a droplet n2 of the recording liquid from 30 to 70%.
As a recording medium, polyethylene terephthalate (PET) having a thickness of 60 µm was used. After the printing, with a metal halide lamp of 365 nm wavelength, UV beam was irradiated at an irradiation dose amount of ~ 500 mJ/cm² to form an image.

[Examples 3, 5 and 7 to 12]. [Comparative Examples 1 through 17], [Refence Examples 2, 4, 6, 13 and 14]
Except that, in example 1, the recording liquid and the ink spread suppressing liquid were changed to one of recording liquids and one of ink spread suppressing liquids shown in Tables 4 and 5, similarly to example 1, an ink set was charged and an image was recorded.

### <Evaluation of Printing Quality>

Of the ink sets obtained in the above (examples 1 through 14, comparative examples 1 through 17), the printing quality of the characters and that of the lattice patterns were evaluated.

### (Printing Quality of Characters)

The printed characters were observed with an optical microscope and visually and qualities of printed characters were evaluated based on criteria below. Obtained results are shown in Table 4.
In the quality evaluation of the printed characters, a level [A] means a practically acceptable level or better.

### -Evaluation Criteria-

A: An ink dot spread less and characters could be clearly printed.
B: An ink dot was recognized to spread and collapses of void portion were observed in some characters.
C: An ink dot spread largely and a character was recognized with difficulty.

### (Printing Quality of Lattice Pattern)

The printed lattice patterns were observed with an optical microscope and visually and the printing qualities of the printed lattice patterns were evaluated based on criteria below. Obtained results are shown in Table 5.
In the case of the lattice pattern, since the application density is high (an area of void portion is small), the conditions become stricter than that of the case of the characters. Accordingly, in the printing quality of the lattice patterns, levels [A], [B] and [C] all become a practically acceptable level or better.

### -Evaluation Criteria-

A: An ink dot spread less even in a portion where ink dots were applied at a high density, that is, a lattice pattern could be clearly printed.
B: In a portion where ink dots were applied at a high density, ink dots spread and some of void portion were collapsed. However, a lattice pattern could be confirmed. In a portion where ink dots were applied at a low density, ink dots spread less and the lattice pattern could be clearly printed.
C: In a portion where ink dots were applied at a high density, ink dots spread largely, and a lattice pattern could not be confirmed. Even in a portion where ink dots were applied at a low density, the ink dots spread to an extent that collapses some of void portion. However, a lattice pattern could be recognized (practically acceptable level).
D: Even in a portion where ink dots were applied at low density, ink dots spread largely, that is, a lattice pattern could not be recognized.

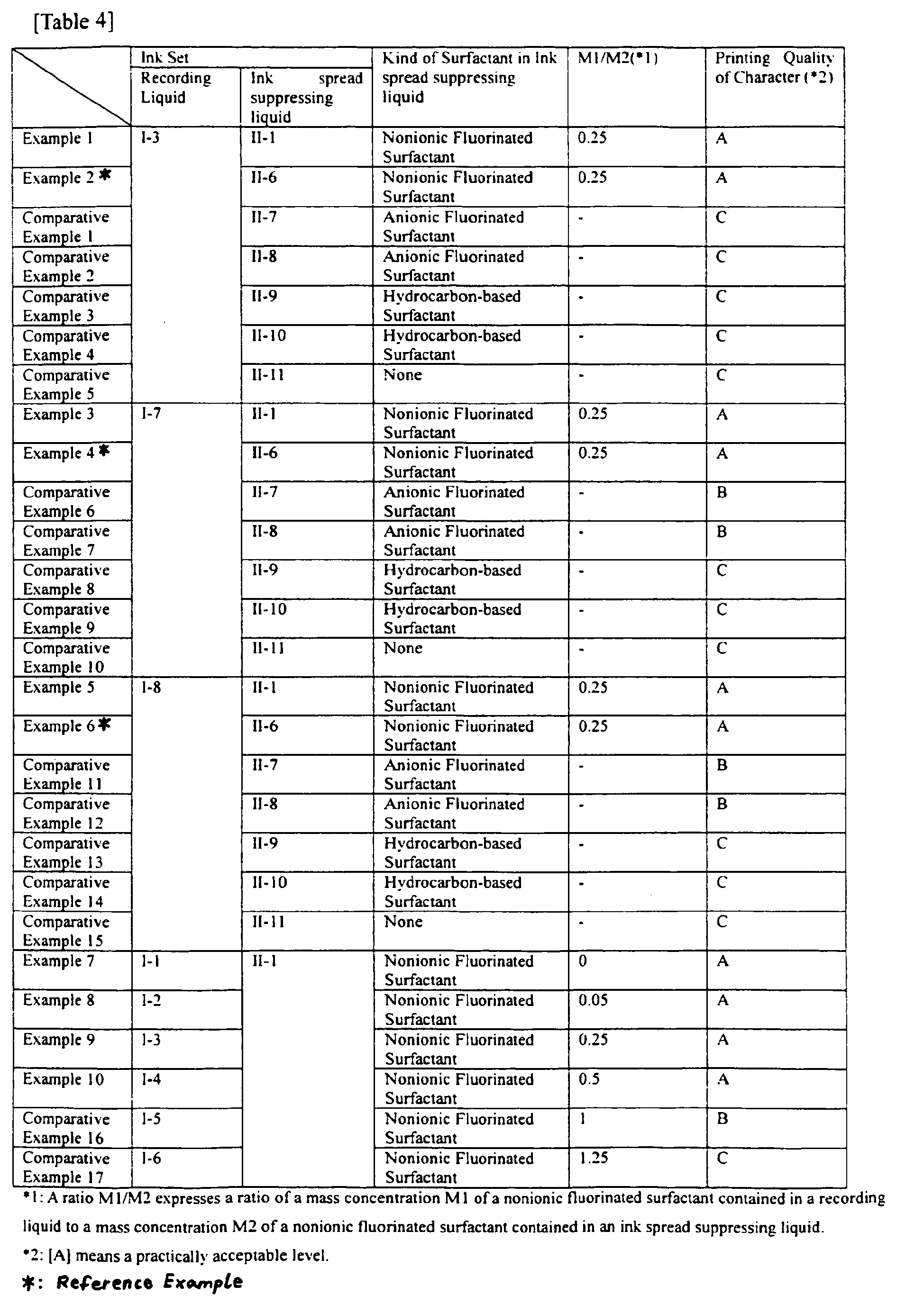

As shown in Table 4, when ink sets of the invention (examples 1, 3, 5 and 7 to 10 were used, printing qualities of characters were a practically acceptable level or better.
On the other hand, when ink sets that do not contain the nonionic fluorinated surfactant in the ink spread suppressing liquid (comparative examples 1 through 15) were used and when ink sets that contain the nonionic fluorinated surfactant in both of the ink spread suppressing liquid and the recording liquid but do not satisfy M1/M2 < 1 (comparative examples 16 and 17) were used, the printing qualities of the characters were damaged.

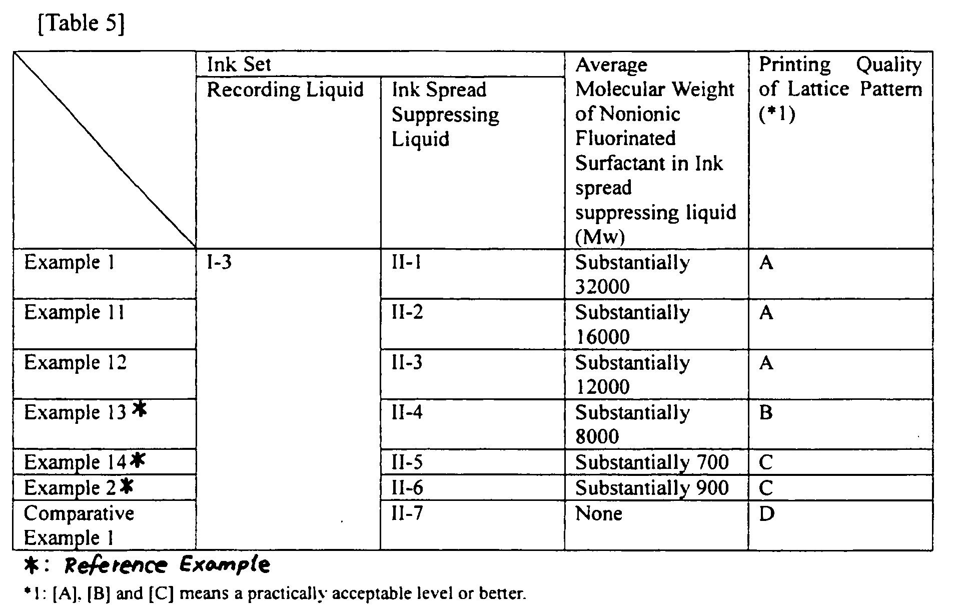

As shown in Table 5, when ink sets of the invention (examples 1, 11 and 12 44) were used, the printing qualities of the lattice patterns were a practically acceptable level or better. Among these, when an ink set that contains a nonionic fluorinated surfactant having a molecular weight of 10000 or more in the ink spread suppressing liquid (examples 1, 11 and 12), the printing qualities of the lattice patterns were particularly excellent.

## Claims

1. An ink-jet recording ink set, comprising:
at least one recording liquid that comprises a polymerizable compound and a colorant; and
an ink spread suppressing liquid that comprises a nonionic fluorinated surfactant and does not substantially contain a colorant;
wherein a ratio of a content M1 of the nonionic fluorinated surfactant in the recording liquid to a content M2 of the nonionic fluorinated surfactant in the ink spread suppressing liquid satisfies M1/M2 < 1, **characterised in that** a molecular weight of the nonionic fluorinated surfactant contained in the ink spread suppressing liquid is 10,000 or more and 100,000 or less.

2. The ink-jet recording ink set of claim 1, wherein the recording liquid does not contain the nonionic fluorinated surfactant.

3. The ink-jet recording ink set of claim 1, wherein the surface tension of the recording liquid is larger than that of the ink spread suppressing liquid.

4. The ink-jet recording ink set of claim 1, wherein the nonionic fluorinated surfactant contained in the ink spread suppressing liquid is a copolymer of a monomer expressed by the following formula (a) and a monomer expressed by the following formula (b): 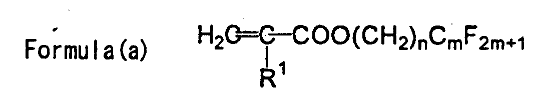 wherein, in the formula (a), R¹ represents a hydrogen atom or a methyl group, n denotes an integer from 1 to 18, and m denotes an integer from 2 to 14, 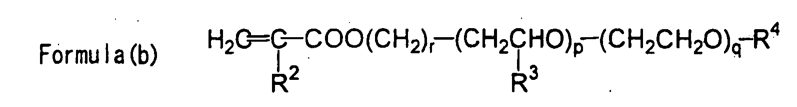 wherein, in the formula (b), R² and R³ each independently represent a hydrogen atom or a methyl group; R⁴ represents a hydrogen atom, an alkyl group having 1 to 5 carbon atoms, or a hydroxyl group; p, q and r each independently denote an integer from 0 to 18; and p and q are not zero simultaneously.

5. The ink-jet recording ink set of claim 1, wherein at least one of the recording liquid and the ink spread suppressing liquid contains a polymerization initiator.

6. The ink-jet recording ink set of claim 1, wherein the polymerizable compound is nonaqueous.

7. An ink-jet recording method using the ink-jet recording ink set according to any one of claims 1 to 6 , the method comprising:
applying the recording liquid and the ink spread suppressing liquid on a recording medium to form an image; and
hardening the formed image by applying energy thereto.

8. The ink-jet recording method of claim 7, wherein the ink spread suppressing liquid is applied on an area corresponding to the image to be formed on the recording medium with droplets of the recording liquid or an area wider than the area corresponding to the image, before application of the droplets of the recording liquid.

9. The ink-jet recording method of claim 7, wherein the energy is applied by photoirradiation or heating.

## Patentansprüche

1. Tintenset für die Tintenstrahlaufzeichnung, umfassend:
mindestens eine Aufzeichnungsflüssigkeit, die eine polymerisierbare Verbindung und ein Färbemittel umfasst; und
eine die Tintenausbreitung unterdrückende Flüssigkeit, die ein nicht-ionisches, fluoriertes Tensid und im wesentlichen kein Färbemittel umfasst;
worin das Verhältnis des Gehalts M1 des nicht-ionischen, fluorierten Tensids in der Aufzeichnungsflüssigkeit zu dem Gehalt M2 des nicht-ionischen, fluorierten Tensids in der die Tintenausbreitung unterdrückenden Flüssigkeit M1/M2 < 1 erfüllt, **dadurch gekennzeichnet, dass** das Molekulargewicht des nicht-ionischen, fluorierten Tensids, das in der die Tintenausbreitung unterdrückenden Flüssigkeit enthalten ist, 10.000 oder mehr und 100.000 oder weniger beträgt.

2. Tintenset für die Tintenstrahlaufzeichnung gemäß Anspruch 1, worin die Aufzeichnungsflüssigkeit das nicht-ionische, fluorierte Tensid nicht enthält.

3. Tintenset für die Tintenstrahlaufzeichnung gemäß Anspruch 1, worin die Oberflächenspannung der Aufzeichnungsflüssigkeit größer ist als die der die Tintenausbreitung unterdrückenden Flüssigkeit.

4. Tintenset für die Tintenstrahlaufzeichnung gemäß Anspruch 1, worin das nicht-ionische, fluorierte Tensid, das in der die Tintenausbreitung unterdrückenden Flüssigkeit enthalten ist, ein Copolymer eines durch die folgende Formel (a) dargestellten Monomers und eines durch die folgende Formel (b) dargestellten Monomers ist: 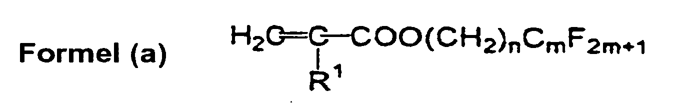 worin in der Formel (a) R¹ ein Wasserstoffatom oder eine Methylgruppe darstellt, n eine ganze Zahl von 1 bis 18 bezeichnet und m eine ganze Zahl von 2 bis 14 bezeichnet, 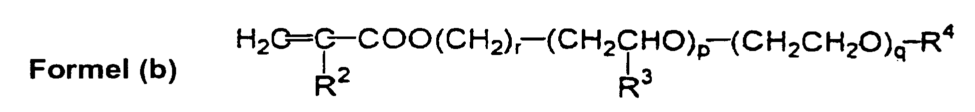 worin in der Formel (b) R² und R³ jeweils unabhängig voneinander ein Wasserstoffatom oder eine Methylgruppe darstellen; R⁴ ein Wasserstoffatom, eine Alkylgruppe mit 1 bis 5 Kohlenstoffatomen oder eine Hydroxylgruppe darstellt; p, q und r jeweils unabhängig voneinander eine ganze Zahl von 0 bis 18 bezeichnen; und p und q nicht gleichzeitig 0 sind.

5. Tintenset für die Tintenstrahlaufzeichnung gemäß Anspruch 1, worin mindestens eine von der Aufzeichnungsflüssigkeit und der die Tintenausbreitung unterdrückenden Flüssigkeit einen Polymerisationsinitiator enthält.

6. Tintenset für die Tintenstrahlaufzeichnung gemäß Anspruch 1, worin die polymerisierbare Verbindung nichtwässrig ist.

7. Tintenstrahlaufzeichnungsverfahren, bei dem das Tintenset für die Tintenstrahlaufzeichnung gemäß irgendeinem der Ansprüche 1 bis 6 eingesetzt wird, wobei das Verfahren umfasst:
Auftragen der Aufzeichnungsflüssigkeit und der die Tintenausbreitung unterdrückenden Flüssigkeit auf ein Aufzeichnungsmedium, um ein Bild zu bilden; und
Härten des gebildeten Bildes durch Einwirkenlassen von Energie hierauf.

8. Tintenstrahlaufzeichnungsverfahren gemäß Anspruch 7, worin die die Tintenausbreitung unterdrückende Flüssigkeit vor der Auftragung der Tröpfchen der Aufzeichnungsflüssigkeit auf einen Bereich aufgetragen wird, der dem auf dem Aufzeichnungsmedium mit Tröpfchen der Aufzeichnungsflüssigkeit zu bildenden Bild entspricht, oder auf eine Fläche aufgetragen wird, die größer ist als die dem Bild entsprechende Fläche.

9. Tintenstrahlaufzeichnungsverfahren gemäß Anspruch 7, worin die Energie durch Fotobestrahlung oder Erwärmen eingebracht wird.

## Revendications

1. Jeu d'encres d'enregistrement à jet d'encre, comprenant :
au moins un liquide d'enregistrement qui comprend un composé polymérisable et un colorant ; et
un liquide de suppression de dispersion d'encre qui comprend un agent de surface fluoré non ionique et qui ne contient sensiblement pas de colorant ;
dans lequel un rapport d'une teneur M1 de l'agent de surface fluoré non ionique dans le liquide d'enregistrement sur une teneur M2 de l'agent de surface fluoré non ionique dans le liquide de suppression de dispersion d'encre satisfait à M1/M2 < 1, **caractérisé en ce qu'**une masse moléculaire de l'agent de surface fluoré non ionique contenu dans le liquide de suppression de dispersion d'encre est de 10 000 ou plus et de 100 000 ou moins.

2. Jeu d'encres d'enregistrement à jet d'encre selon la revendication 1, dans lequel le liquide d'enregistrement ne contient pas l'agent de surface fluoré non ionique.

3. Jeu d'encres d'enregistrement à jet d'encre selon la revendication 1, dans lequel la tension superficielle du liquide d'enregistrement est plus grande que celle du liquide de suppression de dispersion d'encre.

4. Jeu d'encres d'enregistrement à jet d'encre selon la revendication 1, dans lequel l'agent de surface fluoré non ionique contenu dans le liquide de suppression de dispersion d'encre est un copolymère d'un monomère exprimé par la formule suivante (a) et d'un monomère exprimé par la formule suivante (b) _{:} 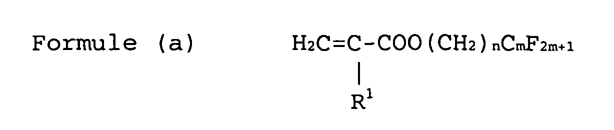 dans lequel, dans la formule (a), R¹ représente un atome hydrogène ou un groupe méthyle, n désigne un entier de 1 à 18, et m désigne un entier de 2 à 14, 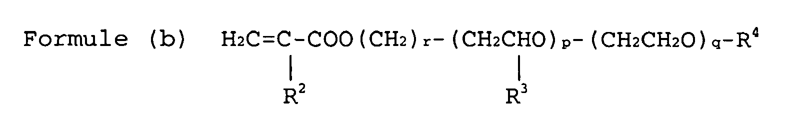 dans laquelle, dans la formule (b), R² et R³ représentent chacun indépendamment un atome d'hydrogène ou un groupe méthyle ; R⁴ représente un atome d'hydrogène, un groupe alkyle ayant 1 à 5 atomes de carbone, ou un groupe hydroxyle ; p, q et r désignent chacun indépendamment un entier de 0 à 18 ; et p et q ne sont pas simultanément à zéro.

5. Jeu d'encres d'enregistrement à jet d'encre selon la revendication 1, dans lequel au moins un du liquide d'enregistrement et du liquide de suppression de dispersion d'encre contient un initiateur de polymérisation.

6. Jeu d'encres d'enregistrement à jet d'encre selon la revendication 1, dans lequel le composé polymérisable est non aqueux.

7. Procédé d'enregistrement à jet d'encre utilisant le jeu d'encres d'enregistrement à jet d'encre selon l'une quelconque des revendications 1 à 6, le procédé comprenant :
l'application du liquide d'enregistrement et du liquide de suppression de dispersion d'encre sur un support d'enregistrement pour former une image ; et
le durcissement de l'image formée en y appliquant de l'énergie.

8. Procédé d'enregistrement à jet d'encre selon la revendication 7, dans lequel le liquide de suppression de dispersion d'encre est appliqué sur une surface correspondant à l'image à former sur le support d'enregistrement avec des gouttelettes du liquide d'enregistrement ou sur une surface plus large que la surface correspondant à l'image, avant application des gouttelettes du liquide d'enregistrement.

9. Procédé d'enregistrement à jet d'encre selon la revendication 7, dans lequel l'énergie est appliquée par photo-irradiation ou chauffage.
